(19) Europäisches Patentamt
European Patent Office
Office européen des brevets

(11) EP 2 444 457 B1

(12) **EUROPEAN PATENT SPECIFICATION**

(45) Date of publication and mention of the grant of the patent:
**07.10.2015 Bulletin 2015/41**

(21) Application number: **11166572.5**

(22) Date of filing: **18.05.2011**

(51) Int Cl.:
***C08K 5/00*** *(2006.01)* ***C08K 5/17*** *(2006.01)*
***C08K 5/3492*** *(2006.01)* ***C08K 5/36*** *(2006.01)*
***C08K 5/52*** *(2006.01)* ***C08L 25/12*** *(2006.01)*
***C08L 51/00*** *(2006.01)* ***C08L 51/06*** *(2006.01)*
***C08L 69/00*** *(2006.01)* ***C08L 1/10*** *(2006.01)*
***C08L 1/12*** *(2006.01)* ***C08L 1/14*** *(2006.01)*
***C08L 9/02*** *(2006.01)* ***C08L 9/06*** *(2006.01)*

(54) **Resin composition and resin molded article**

Kunststoffzusammensetzung und Kunststoffformartikel

Composition de résine et produit moulé en résine

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.10.2010 JP 2010237867**
**24.12.2010 JP 2010288613**

(43) Date of publication of application:
**25.04.2012 Bulletin 2012/17**

(73) Proprietor: **Fuji Xerox Co., Ltd.**
**Minato-ku,**
**Tokyo (JP)**

(72) Inventors:
- **Okoshi, Masayuki**
**Minamiashigara-shi Kanagawa (JP)**
- **Mikami, Masato**
**Minamiashigara-shi Kanagawa (JP)**
- **Yao, Kenji**
**Minamiashigara-shi Kanagawa (JP)**

(74) Representative: **Ward, James Norman**
**Haseltine Lake LLP**
**Lincoln House, 5th Floor**
**300 High Holborn**
**London WC1V 7JH (GB)**

(56) References cited:
**JP-A- 2006 111 858**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 444 457 B1

## Description

BACKGROUND

Technical Field

The present invention relates to a resin composition and a resin molded article.

Related Art

Conventionally, a variety of resin compositions have been provided and used for different purposes, particularly for various kinds of components, cabinets, and others of home appliances and automobiles. Also, thermoplastic resins have been used for components such as the cabinets of office apparatuses and electronic/electric apparatuses.

Recently, against global-scale environmental problems, plant-derived resin has been used with great promise as a material capable of reducing greenhouse gas emissions. Cellulose derivatives are among conventionally known plant-derived resins and have been widely used for coating materials and fiber products, but as yet there have been very few cases of its use for resin molded articles.

For example, a cellulose ester-based resin composition has been disclosed, which includes cellulose ester (such as cellulose acetate having a total average substitution rate of 2.7 or less), non-cellulose ester-based thermoplastic resin (such as aromatic polyester resin or aromatic polycarbonate resin), a plasticizer for the cellulose ester (such as phosphate ester or phthalate ester), and a bleed-out inhibitor (such as condensed phosphate ester) (refer to, for example, JP-A No. 2007-161943).

In another disclosed resin composition, the composition contains from 10 to 75% by weight of one or more resin selected from the group consisting of (A) polylactic resins and (B) cellulose esters, (C) from 25 to 90% by weight of an aromatic polycarbonate resin, and (D) a compatibilizer (such as at least one selected from the group consisting of inorganic fillers, polymer compounds of grafted or copolymerized glycidyl compounds or acid anhydrides, grafted polymers having an aromatic polycarbonate chain, and organic metal compounds) included in an amount ranging from 1 to 50 parts by weight with respect to the total amount, 100 parts by weight, of the one or more resin selected from (A) and (B) and the resin (C), along with (E) a flame retardant, (F) a fluorine compound, and (G) an epoxy compound (refer to, for example, JP-A No. 2006-111858).

There has also been disclosed a fiber-reinforced and flame-retardant resin composition characterized by that it includes (A) a thermoplastic polyester resin, (B) a fiber mainly composed of cellulose, and (C) a first flame retardant, in which a ratio between (A) and (B) ranges from 95:5 to 5:95; the thermoplastic polyester resin (A) contains a biomass material as a part of its raw material; and the flame retardant (C) is a phosphate salt (melamine polyphosphate) having a 2,4,6-triamino-1, 3, 5-triazine skeleton represented by Formula (1) "$(C_3H_6N_6)_n \bullet H_{n+2}P_nO_{3n+1}$" and is contained in an amount ranging from 1 to 20 parts by weight with respect to 100 parts by weight of the content of the fiber mainly composed of cellulose (B) (refer to, for example, JP-A No. 2008-303288).

In addition, there has been disclosed a ligneous resin composition that includes a thermoplastic resin, a cellulose filler, an inorganic filler, and a foaming agent, in which the cellulose filler is modified with silicone in the presence of a fluorine-containing polymer (refer to, for example, Japanese Patent No. 3704280).

Furthermore, there has been disclosed a wood-tone resin molded article having a specific density ranging from 0.5 to 1.0, in which the resin molded article is produced by mix-molding a resin composition consisting of 1 to 60% by weight of cellulose powder having a white degree of 80% or more and 40 to 99% by weight of an acrylonitrile-butadiene-styrene copolymer resin (hereinafter referred to as ABS resin); 0.1 to 10 parts by weight, with respect to 100 parts by weight of the resin composition, of a resin composition consisting of 3 to 20% by weight of a coloring agent and 80 to 97% by weight of a styrene-based resin having a melt viscosity ratio of 0.4 or lower or 2.5 or higher under a shearing speed of $10^3$ $sec^{-1}$ at 200°C with respect to the ABS resin; and 0.01 to 1 parts by weight, with respect thereto, of a foaming agent (refer to, for example, Japanese Patent No. 3695958).

SUMMARY

It is an object of the invention to provide a resin composition that enables the production of a resin molded article having an improved mechanical strength.

According to an exemplary embodiment of the invention, there is provided a resin composition including: cellulose ester in an amount of from 50 to 95 phr; and an acrylonitrile-styrene copolymer-containing resin in an amount of from 5 to 50 phr.

BRIEF DESCRIPTION OF THE DRAWING

Exemplary embodiments of the present invention will be described in detail based on the following figures wherein:

Fig. 1 is a schematic view illustrating one example of components of an electronic/electric apparatus including a resin molded article according to an exemplary embodiment of the present invention.

DETAILED DESCRIPTION

According to aspects of an embodiment of the invention, there are provided resin compositions as below.

Specifically, according to aspect 1 of the embodiment of the invention, there is provided a resin composition including: cellulose ester in an amount of from 50 to 95 phr; and an acrylonitrile-styrene copolymer-containing resin in an amount of from 5 to 50 phr.

According to aspect 2 of the embodiment of the invention, there is provided the resin composition according to aspect 1, further including a copolymer of an acrylonitrile-styrene polymer and a glycidyl compound in an amount of 0.1 phr or more.

According to aspect 3 of the embodiment of the invention, there is provided the resin composition according to aspect 1 or 2, further including a polycarbonate, in which a total amount of the polycarbonate and the acrylonitrile-styrene copolymer-containing resin is from 20 to 50 phr.

According to aspect 4 of the embodiment of the invention, there is provided the resin composition according to any one of aspects 1 to 3, including the copolymer of an acrylonitrile-styrene polymer and a glycidyl compound in an amount of from 0.1 to 20 phr.

According to aspect 5 of the embodiment of the invention, there is provided the resin composition according to any one of aspects 1 to 4, wherein the cellulose ester is cellulose acetate propionate.

According to aspect 6 of the embodiment of the invention, there is provided the resin composition according to any one of aspects 1 to 5, further including an aromatic condensed phosphate ester compound represented by the following Structural Formula (1) in an amount of from 5 to 40 phr.

Structural Formula (1)

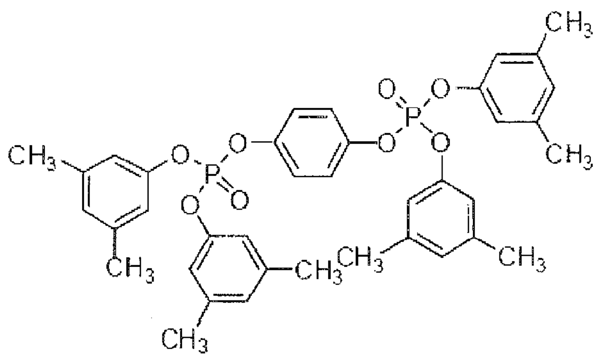

According to aspect 7 of the embodiment of the invention, there is provided the resin composition according to any one of aspects 1 to 6, further including an ammonium salt compound, a melamine salt compound, or a sulfate compound in an amount of from 0.005 to 20 phr.

According to aspect 8 of the embodiment of the invention, there is provided the resin composition according to any one of aspects 1 to 7, further including an anti-drip agent.

According to aspect 9 of the embodiment of the invention, there is provided a resin molded article including: cellulose ester in an amount of from 50 to 95 phr; and an acrylonitrile-styrene copolymer-containing resin in an amount of from 5 to 50 phr.

According to aspect 10 of the embodiment of the invention, there is provided the resin molded article according to aspect 9, further including a copolymer of an acrylonitrile-styrene polymer and a glycidyl compound in an amount of 0.1 phr or more.

According to aspect 11 of the embodiment of the invention, there is provided the resin molded article according

to aspect 9 or 10, further including a polycarbonate, in which a total amount of the polycarbonate and the acrylonitrile-styrene copolymer-containing resin is from 20 to 50 phr.

According to aspect 12 of the embodiment of the invention, there is provided the resin molded article according to aspect 10 or 11, including the copolymer of an acrylonitrile-styrene polymer and a glycidyl compound in an amount of from 0.1 to 20 phr.

According to aspect 13 of the embodiment of the invention, there is provided the resin molded article according to any one of aspects 9 to 12, wherein the cellulose ester is cellulose acetate propionate.

According to aspect 14 of the embodiment of the invention, there is provided the resin molded article according to any one of aspects 9 to 13, further including an aromatic condensed phosphate ester compound represented by the above Structural Formula (1) in an amount of from 5 to 40 phr.

According to aspect 15 of the embodiment of the invention, there is provided the resin molded article according to any one of aspects 9 to 14, further including an ammonium salt compound, a melamine salt compound, or a sulfate compound in an amount of from 0.005 to 20 phr.

According to aspect 16 of the embodiment of the invention, there is provided the resin molded article according to any one of aspects 9 to 15, further including an anti-drip agent.

According to aspects 1 and 5 of the embodiment of the invention, there may be provided the resin composition that enables the production of a resin molded article having an improved mechanical strength, as compared to a composition not including cellulose ester in the amount of from 50 to 95 phr and the acrylonitrile-styrene copolymer-containing resin in the amount of from 5 to 50 phr.

According to aspect 2 of the embodiment of the invention, there may be provided the resin composition that enables the production of a resin molded article having an improved dimensional stability, as compared to a composition including cellulose ester in the amount of from 50 to 95 phr and the acrylonitrile-styrene copolymer-containing resin in the amount of from 5 to 50 phr but not including the copolymer of an acrylonitrile-styrene polymer and a glycidyl compound in the amount of 0.1 phr or more.

According to aspect 3 of the embodiment of the invention, there may be provided the resin composition that enables the production of a resin molded article having an improved mechanical strength, as compared to a composition not including cellulose ester in the amount of from 50 to 95 phr and the acrylonitrile-styrene copolymer-containing resin and polycarbonate in the total amount of from 20 to 50 phr.

According to aspect 4 of the embodiment of the invention, there may be provided the resin composition that enables the production of a resin molded article having an improved tensile strength, as compared to a composition including the copolymer of an acrylonitrile-styrene polymer and a glycidyl compound in an amount of more than 20 phr.

According to aspect 6 of the embodiment of the invention, there may be provided the resin composition that enables the production of a resin molded article that achieves a V-2 rating or better in UL-94 testing of the UL (Underwriters Laboratories Inc.: hereinafter the same) standard, as compared to a composition not including the aromatic condensed phosphate ester compound represented by the above structural formula (1) in the amount of from 5 to 40 phr.

According to aspect 7 of the embodiment of the invention, there may be provided the resin composition that enables the production of a resin molded article that ensures a V-2 rating or better in UL-94 testing of the UL standard, as compared to a composition not including one selected from an ammonium salt compound, a melamine salt compound, and a sulfate compound in the amount of from 0.005 to 20 phr.

According to aspect 8 of the embodiment of the invention, there may be provided the resin composition that enables the production of a resin molded article having an improved impact resistance, as compared to a composition not including any anti-drip agent.

According to aspects 9 and 13 of the embodiment of the invention, there may be provided the resin molded article having an improved mechanical strength, as compared to a resin molded article not including cellulose ester in the amount of from 50 to 95 phr and the acrylonitrile-styrene copolymer-containing resin in the amount of from 5 to 50 phr.

According to aspect 10 of the embodiment of the invention, there may be provided the resin molded article having an improved dimensional stability, as compared to a resin molded article including cellulose ester in the amount of from 50 to 95 phr and the acrylonitrile-styrene copolymer-containing resin in the amount of from 5 to 50 phr but not including the copolymer of an acrylonitrile-styrene polymer and a glycidyl compound in the amount of 0.1 phr or more.

According to aspect 11 of the embodiment of the invention, there may be provided the resin molded article having an improved mechanical strength, as compared to a resin molded article not including cellulose ester in the amount of from 50 to 95 phr and the acrylonitrile-styrene copolymer-containing resin and polycarbonate in the total amount of from 20 to 50 phr.

According to aspect 12 of the embodiment of the invention, there may be provided the resin molded article having an improved tensile strength, as compared to a resin molded article including the copolymer of an acrylonitrile-styrene polymer and a glycidyl compound in an amount of more than 20 phr.

According to aspect 14 of the embodiment of the invention, there may be provided the resin molded article that achieves a V-2 or better rating in UL-94 testing of the UL standard, as compared to a resin molded article not including

the aromatic condensed phosphate ester compound represented by the above Structural Formula (1) in the amount of from 5 to 40 phr.

According to aspect 15 of the embodiment of the invention, there may be provided the resin molded article that ensures a V-2 or better rating in UL-94 testing of the UL standard, as compared to a resin molded article not including one selected from an ammonium salt compound, a melamine salt compound, and a sulfate compound in the amount of from 0.005 to 20 phr.

According to aspect 16 of the embodiment of the invention, there may be provided the resin molded article having an improved impact resistance, as compared to a resin molded article not including any anti-drip agent.

Hereinafter, a description will be given of an exemplary embodiment as one example of the resin composition and the resin molded article according to the invention.

*Resin Composition*

The resin composition according to the present exemplary embodiment is a resin composition that includes cellulose ester and a resin containing the copolymer of acrylonitrile and styrene (hereinafter referred to as "acrylonitrile-styrene copolymer-containing resin").

The content of the cellulose ester is from 50 to 95 phr, and the content of the acrylonitrile-styrene copolymer-containing resin is from 5 to 50 phr.

The term "phr" indicates the abbreviation of "per hundred resin" and represents "parts by weight" with respect to 100 parts by weight of the entire resin component.

In the resin composition according to the exemplary embodiment, mechanical strength of a resin molded article produced from the composition is improved by the formulation prepared as above.

Specifically, for example, the mechanical strength in a flow direction of resin during molding (hereinafter also referred to as "machine direction") is about 30 Mpa in the case of the cellulose ester alone and about 40 Mpa in the case of the acrylonitrile-styrene copolymer containing resin alone (such as acrylonitrile-butadiene-styrene resin). Meanwhile, in the resin composition according to the exemplary embodiment, by mixing both resins in the above-mentioned content ratio, the mechanical strength of a resin molded article is improved as compared to using the cellulose ester alone.

In addition, for example, the mechanical strength in a direction traversing the flow direction of resin during molding (hereinafter also referred to as "traverse direction") is about 30 Mpa in the case of the cellulose ester alone and about 50 Mpa in the case of the acrylonitrile-styrene copolymer containing resin alone. Meanwhile, in the resin composition according to the exemplary embodiment, by mixing both resins in the above-mentioned ratio, the mechanical strength is increased exceeding, for example, 60 Mpa, which results in the value of larger than the mechanical strength obtained by each resin alone.

The reason for this seems to come from the formation of the higher-order structure of the acrylonitrile-styrene copolymer-containing resin in the cellulose ester. Since the produced resin molded article is relatively transparent, the acrylonitrile-styrene copolymer-containing resin seems to be dispersed minutely in the cellulose ester. Actually conducted microscopic observation shows the dispersion of the acrylonitrile-styrene copolymer-containing resin having a particle diameter of from 100 to 500 nm. In this case, the domain of the acrylonitrile-styrene copolymer-containing resin is dispersed not spherically but, for example, in a short fiber form.

Therefore, supposedly, due to the presence of the minute short fiber form of the acrylonitrile-styrene copolymer-containing resin in cellulose ester, the short fibers of resin interpenetrate each other also in a surface traversing the resin flow direction during molding, so that the mechanical strength is improved in both the machine direction and the traverse direction, and furthermore, particularly in the traverse direction.

The resin molded article produced by the resin composition according to the exemplary embodiment has the improved mechanical hardness, and thereby allows for, for example, a thin-wall member or the like of the resin molded article that has been previously designed to be thick due to a concern about weakness of welds (junctures of a fluidized resin composition). This results in cost reduction, and reduction of the need for considering gate design or the like in molding, such as the need for arranging a weld in a position without any load concentration, thereby increasing the freedom of design and achieving cost reduction.

In addition, the resin composition according to the exemplary embodiment may include the copolymer of an acrylonitrile-styrene polymer and a glycidyl compound in an amount of 0.1 phr or more.

There are hitherto known resin compositions including a cellulose derivative (such as cellulose ester), an acrylonitrile-styrene copolymer-containing resin, and a compatibilizer.

However, now that much use of plant-derived resins is being demanded in consideration of environmental problems, it has been found that a rich composition including 50 phr or more of a plant-derived resin, namely a cellulose derivative (such as cellulose ester) reduces the dimensional stability of a resin molded article produced from the composition. In addition, such a tendency has been found to be more pronounced under the wet heat environment (which means an environment of a temperature of 65°C and a relative humidity of 85%, and the expression hereinbelow also

means the same conditions unless specifically defined otherwise).

Thus, in the resin composition according to the present exemplary embodiment, it is desirable to mix, as the compatibilizer, the copolymer of an acrylonitrile-styrene polymer and a glycidyl compound in the amount of 0.1 phr or more in the formulation including cellulose ester in the amount of from 50 to 95 phr and the acrylonitrile-styrene copolymer-containing resin in the amount of from 5 to 50 phr.

With the formulation prepared as above, the resin composition according to the exemplary embodiment enables the production of a resin molded article having an improved dimensional stability. This inhibits the produced resin molded article from contracting in the wet heat environment, thereby, for example, preventing cracks or other problems from occurring due to stress concentration or the like in the resin molded article.

Although the reason for that is unknown, there is an increase in a gel fraction measured in the resin composition of the exemplary embodiment. It is thus speculated that an epoxy group included in, as a compatibilizer, the copolymer of an acrylonitrile-styrene polymer and a glycidyl compound (a glycidyl compound as the polymerization component) is bonded to a hydroxyl group included in the cellulose acetate propionate to thereby form a cross-linked structure.

Due to the action speculated as described above, more cross-linked structures will be formed along with more increases in the content of the copolymer of an acrylonitrile-styrene polymer and a glycidyl compound. Therefore, theoretically, there is specifically no upper limit to the content of the copolymer thereof.

In addition to that, with the formulation prepared as above, the resin composition according to the exemplary embodiment enables the production of a resin molded article having a reduced glossiness and improved mechanical properties (particularly elongation). The improved mechanical properties (particularly elongation), for example, facilitate the dispersion of stress concentration due to a screwed clamp such as a boss, self tapping, or the like, thereby easily inhibiting breakage of the resin molded article.

Glossiness of a resin molded article is known to occur due to the diffused reflection of different kinds of resins on the surface of the article. However, herein, by selecting, as the compatibilizer, the copolymer of an acrylonitrile-styrene polymer and a glycidyl compound, the resins (cellulose acetate propionate and polycarbonate) are dispersed to an extent in which the diffused reflection hardly occurs. Thereby, glossiness seems to be reduced in the produced resin molded article.

Furthermore, the mechanical properties (particularly elongation) seem to be also improved by the dispersion of the resins (cellulose acetate propionate and polycarbonate).

The resin composition according to the exemplary embodiment enables the production of a resin molded article having impact resistance and self-sustaining shape retentivity (the modulus of elasticity necessary to achieve the retentivity) equivalent to those of a resin molded article made of acrylonitrile-butadiene-styrene resin, a resin molded article made of acrylonitrile-butadiene-styrene resin and polycarbonate, and the like.

In addition, the resin composition according to the exemplary embodiment may further include polycarbonate in which a total amount of the polycarbonate and the acrylonitrile-styrene copolymer-containing resin is from 20 to 50 phr.

The mechanical properties of a resin molded article produced therefrom are improved by the formulation prepared as above.

In addition, the resin composition according to the exemplary embodiment may be prepared by mixing the copolymer of an acrylonitrile-styrene polymer and a glycidyl compound in the amount of 0.1 phr or more in the formulation including cellulose ester in the amount of from 50 to 95 phr and a combination of the acrylonitrile-styrene copolymer-containing resin and polycarbonate in the total amount of from 20 to 50 phr.

In the formulation prepared as above, the dimensional stability of a resin molded article produced therefrom is improved by mixing the copolymer of an acrylonitrile-styrene polymer and a glycidyl compound in the formulation including cellulose ester, the acrylonitrile-styrene copolymer-containing resin, and polycarbonate.

In addition to that, the above formulation achieves the reduction of glossiness and the improvement of mechanical properties (particularly elongation) in the produced resin molded article.

Although the reason for that is also unknown, it is speculated that an epoxy group included in the copolymer of an acrylonitrile-styrene polymer and a glycidyl compound (a glycidyl compound as the polymerization component) as the compatibilizer is bonded to a hydroxyl group included in cellulose ester to thereby form a cross-linked structure. In addition, it seems that an acrylonitrile-styrene polymer site included in the copolymer is compatible with the acrylonitrile-styrene copolymer-containing resin, as well as the acrylonitrile-styrene copolymer-containing resin is compatible with the polycarbonate, whereby the three resins seem to be compatible with one another, while having the cross-linked structure.

Herein, the formulation including cellulose ester, the acrylonitrile-styrene copolymer-containing resin, and polycarbonate is advantageous in that since there are many commercially available resin molded articles made of a mixture of an acrylonitrile-styrene copolymer-containing resin and polycarbonate, products obtained by reproducing (recycling) such resin molded articles can be used as raw material.

Hereinafter, a detailed explanation will be given of each component of the resin composition according to the present exemplary embodiment.

*Resins*

*Cellulose Ester*

As the cellulose ester to be used, for example, cellulose acetates are suitable. Specific examples of the cellulose acetates include cellulose acetate propionate, cellulose acetate butyrate, cellulose acetate methylate, cellulose acetate hydroxyethylate, cellulose acetate hydroxypropylate, cellulose butyrate hydroxypropylate, and cellulose diacetate.

Among them, cellulose acetate propionate (CAP) in which cellulose is esterified with propionic acid, and cellulose diacetate (CDA) are particularly favorable from the viewpoint of processability.

Herein, from the viewpoint of improvement in the impact resistance of the resin molded article, the cellulose ester may include a plasticizer (such as an adipate plasticizer or a polyester plasticizer, excluding phthalate ester) in an amount of from 5 to 25% by weight with respect to the cellulose ester.

An extremely small amount of the plasticizer may make it difficult for the resin molded article to have impact resistance. Meanwhile, an excessive amount thereof may reduce the fluidity of the resin composition and thus may easily reduce the tensile strength of the resin molded article.

A weight average molecular weight of the cellulose ester is not specifically limited, but it is in a range desirably from 10000 to 100000, and more desirably from 15000 to 80000.

When the weight average molecular weight of the cellulose ester is too low, the fluidity thereof becomes excessive and thus processing may be impossible, whereas when the weight average molecular weight thereof is too high, the fluidity thereof becomes insufficient and thus processing may be impossible.

The weight average molecular weight indicates a value measured using a gel permeation chromatography apparatus PROMINENCE GPC SYSTEM (trade name, manufactured by Shimadzu Corporation) and a measurement column SHIM-PACK GPC-80M (trade name, manufactured by Shimadzu Corporation). The same shall apply equally to the weight average molecular weight described below.

The resin composition includes the cellulose ester in the amount of from 50 to 95 phr, but desirably includes in an amount of from 55 to 95 phr.

When the content of the cellulose ester is too small, it is difficult for the resin component (its molded article) to receive certification based on the "green plastic" or "biomass plastic" identification and labeling system by the Japan BioPlastics Association. Meanwhile, an excessive amount of the content thereof may easily reduce the load deflection temperature (HDT: heat deflection temperature) of the resin molded article.

*Acrylonitrile-Styrene Copolymer-Containing Resin*

The acrylonitrile-styrene copolymer-containing resin is not specifically limited and any resin can be used as long as it is a resin including the copolymer of acrylonitrile and styrene (the copolymerization ratio between them is a weight ratio of from 10:1 to 1:10, for example).

Specific examples of the acrylonitrile-styrene copolymer-containing resin include at least one of acrylonitrile-styrene resin (AS resin), acrylonitrile-styrene-acrylic acid resin (ASA resin), and acrylonitrile-butadiene-styrene resin (ABS resin), and a mixture of two or more kinds thereof (a polymer alloy).

Among those resins, AS resin and ABS resin are favorable from the viewpoint of cost. Although AS resin and ABS resin are not limited to specific ones, they may be resins produced by polymer blending as well as by copolymerization.

A weight average molecular weight of the acrylonitrile-styrene copolymer-containing resin is desirably in a range from 1000 to 100000, and more desirably in a range from 5000 to 50000.

When the weight average molecular weight thereof is too low, its fluidity becomes excessive and thus processability may be reduced, whereas when the weight average molecular weight thereof is too high, the fluidity becomes insufficient, and thus the processability may be reduced.

The resin composition includes the acrylonitrile-styrene copolymer-containing resin in the amount of from 5 to 50 phr, but desirably includes the resin in an amount of from 10 to 30 phr.

However, when the acrylonitrile-styrene copolymer-containing resin is used in combination with polycarbonate as will be described below, it is desirable to include the acrylonitrile-styrene copolymer-containing resin and the polycarbonate in a total amount of from 20 to 50 phr.

When the above content is too small, the load deflection temperature (heat deflection temperature) of the resin molded article tends to be reduced. Meanwhile, when the content is too much, it is difficult for the resin component (its molded article) to receive certification based on the "green plastic" or "biomass plastic" identification and labeling system by the Japan BioPlastics Association.

In the resin composition according to the exemplary embodiment, transparency occurs in a resin molded article produced therefrom when polycarbonate as described below is not included.

Although the reason for that is unknown, the occurrence of transparency seems to come from the minute dispersion of the acrylonitrile-styrene copolymer-containing resin in the cellulose ester, as described above.
Espcially, in a case in which a copolymer of the copolymer of an acrylonitrile-styrene polymer and a glycidyl compound is used as a compatibilizer, it is presumed that an epoxy group contained in the copolymer (the glycidyl compound as a polymerization component) and a hydroxyl group contained in the cellulose ester bind together, thereby forming a linking structure, and a site of the acrylonitrile-styrene polymer contained in the copolymer becomes compatible with the acrylonitrile-styrene copolymer-containing resin, and the acrylonitrile-styrene copolymer-containing resin is minutely dispersed by the cellulose ester. As a result, transparency of the obtained resin molded article becomes easy to be developed.

*Polycarbonate*

The polycarbonate to be used is not particularly limited. For example, there may be mentioned a polycarbonate having -O-R-OCO- as a repeting unit. In this case, R may be diphenyl propane, p-xylene, or the like. In addition, the -O-R-O- is not particularly limited, as long as it is a dioxy compound.
Specific examples of the polycarbonate include aromatic polycarbonates such as bisphenol A polycarbonate, bisphenol S polycarbonate, and biphenyl polycarbonate.
The polycarbonate may be a polycarbonate-silicone copolymer or a polycarbonate-undeca acid amide copolymer.
A weight average molecular weight of the polycarbonate desirably ranges from 5000 to 30000, and more desirably ranges from 10000 to 25000.
When the weight average molecular weight of the polycarbonate is less than 5000, its fluidity becomes excessive and thus processability may be reduced, whereas when the weight average molecular weight thereof is more than 30000, the fluidity becomes insufficient and thus the processability may be reduced.
The polycarbonate may be contained in the resin composition in an amount of from 20 to 50 phr, desirably from 20 to 45 phr, and more desirably from 20 to 40 phr. In a case in which an acrylonitrile-styrene copolymer-containing resin described below is contained in the resin composition, the polycarbonate may be contained in the resin composition in an amount of from 20 to 50 phr, desirably from 20 to 45 phr, and more desirably from 20 to 40 phr, respectively in a total amount of the polycarbonate and the acrylonitrile-styrene copolymer-containing resin.
When the total amount is too small, the load deflection temperature (HDT: heat deflection temperature) of the resin molded article tends to be reduced, whereas when the total amount is too large, it may be difficult for the resin composition (its molded article) to receive certification based on the "green plastic" or "biomass plastic" identification and labeling system by the Japan BioPlastics Association.

*Compatibilizer*

The compatibilizer to be used is the copolymer of an acrylonitrile-styrene polymer and a glycidyl compound.
The acrylonitrile-styrene polymer is a copolymer of acrylonitrile and styrene as monomers (for example, the polymerization ratio: acrylonitrile/styrene is from 10/100 to 100/10).
Examples of the glycidyl compound include a monomer having a glycidyl group (for example, there may be mentioned glycidyl methacrylate and glycidyl acrylate, of which glycidyl methacrylate is more favorable), and a polymer obtained from a copolymer of a monomer having a glycidyl group and another monomer such as methacrylate, acrylate, or alkene (such as ethylene).
Specific examples of the copolymer of an acrylonitrile-styrene polymer and a glycidyl compound include a graft copolymer of an acrylonitrile-styrene polymer and an ethylene-glycidyl methacrylate polymer and a copolymer of a polycarbonate polymer, an acrylonitrile-styrene polymer and glycidyl methacrylate.
In the copolymer of an acrylonitrile-styrene polymer and a glycidyl compound, the copolymerization ratio between the acrylonitrile-styrene polymer and the glycidyl compound is, for example, in a weight ratio ranging desirably from 100/100 to 1000/1 (acrylonitrile-styrene polymer/glycidyl compound), more desirably from 100/50 to 1000/2, and still more desirably from 100/50 to 1000/3.
A weight average molecular weight of the copolymer of an acrylonitrile-styrene polymer and a glycidyl compound is, for example, in a range desirably from 500 to 100000, more desirably from 500 to 75000, and still more desirably from 500 to 50000.
As the compatibilizer, the copolymer of an acrylonitrile-styrene polymer and a glycidyl compound is included in the resin composition, desirably in the amount of 0.1 phr or more, more desirably in an amount of from 0.1 to 20 phr and still more desirably in an amount of from 0.1 to 15 phr.
When the amount of the above copolymer is less than 0.1 phr, it may be difficult to achieve the dimensional stability of the resin molded article, and the moldability of the resin composition may tend to be reduced. In addition, the

glossiness of the resin molded article may tend to occur. Meanwhile, when the amount of the above copolymer as the compatibilizer increases to some extent, the cross linkage between the above copolymer and the cellulose ester becomes excessively strong and thereby easily becomes britle, so that the tensile strength of the resin molded article obtained by effect of the flexible structure tends to be reduced. Therefore, in the case of using the resin molded article for an intended use that is sensitive to the tensile strength, the amount of the above copolymer is desirably 20 phr or less.

Further, in a case in which the resin composition contains a cellulose ester in an amount of from 50 phr to 80 phr and contains a polycarbonate in an amount of from 20 phr to 50 phr, the copolymer of an acrylonitrile-styrene polymer and a glycidyl compound of the compatibilizer may be contained in the resin composition in an amount of 5 phr or more, desirably from 5 to 20 phr, and more desirably from 5 to 15 phr.

Additionally, when another component is copolymerized with the copolymer of an acrylonitrile-styrene polymer and a glycidyl compound as the compatibilizer, it is desirable to appropriately adjust the content of the compatibilizer in the resin composition within the above ranges so as not to reduce its compatibility with the resins that form the resin composition.

Taking as an example the case of polycarbonate to be contained, when a compatibilizer containing a large amount of polycarbonate as the other component is in each of a resin composition containing a relatively large amount of polycarbonate and a resin composition containing a relatively small amount of polycarbonate, it is desirable to adjust such that the latter resin composition contains a more important amount of the compatibilizer than does the former resin composition.

*Flame Retardant*

The resin composition according to the present exemplary embodiment may include a flame retardant for providing flame retardancy.

Examples of the flame retardant include phosphorus flame retardants, silicone flame retardants, nitrogen-containing flame retardants, sulfuric acid-based flame retardants, and inorganic hydroxide flame retardants. Examples of the phosphorus flame retardants include condensed phosphate ester, melamine polyphosphate, ammonium polyphosphate, aluminum polyphosphate, and melamine pyrophosphate.

Among the condensed phosphate ester, the aromatic condensed phosphate ester represented by the above Structural Formula (1) is especially favorable as a flame retardant. A resin molded article achieves a V-2 rating or better in UL-94 testing of the UL standard due to the aromatic condensed phosphate ester represented by the above Structural Formula (1).

Examples of the silicone flame retardants include dimethyl siloxane, nanosilica, and silicone-modified polycarbonate.

Examples of the nitrogen-containing flame retardants include melamine compounds and triazine compounds.

Examples of the sulfuric acid-based flame retardants include melamine sulfate and guanidine sulfate.

Examples of the inorganic hydroxide-based flame retardants include magnesium hydroxide, aluminum hydroxide, and montmorillonite.

Among those flame retardants, phosphorous flame retardants, sulfuric acid-based flame retardants, and inorganic hydroxide-based flame retardants are desirable from the viewpoint of improvement in flame retardancy. Flame retardants in the form of a solid phase at room temperature (e.g. 25°C) are particularly favorable. Examples of such flame retardants include melamine polyphosphate, ammonium polyphosphate, aluminum polyphosphate, melamine pyrophosphate, magnesium hydroxide, aluminum hydroxide, and montmorillonite).

The flame retardant to be used may be a synthesized product or a commercially available product.

Examples of the commercially available phosphorus flame retardants include PX-200, PX-202, CR-741, CE-733S, and TPP (all trade names, manufactured by Daihachi Chemical Industry Co., Ltd.), TERRAJU C80 (trade name, manufactured by Chemische Fabrik Budenheim KG), and EXOLIT AP422 and EXOLIT OP930 (all trade names, manufactured by Clariant GmbH).

Examples of the commercially available silicone flame retardants include DC4-7081 (trade name, manufactured by Toray Dow Corning Silicone Co., Ltd.).

Examples of the commercially available nitrogen-containing flame retardants include FP-2200 (trade name, manufactured by ADEKA Co. Ltd).

Examples of the commercially available sulfuric acid-based flame retardants include APINON 901 (trade name, manufactured by Sanwa Chemical Co., Ltd.), MELAMINE PYROPHOSPHATE (trade name, manufactured by Shimonoseki Mitsui Chemicals Inc.), and FP-2100 (trade name, manufactured by ADEKA Co., Ltd.).

Examples of the commercially available inorganic hydroxide flame retardants include MGZ-3 and MGZ-300 (all trade names, manufactured by Sakai Chemical Industry Co., Ltd.), and B-103ST (trade name, manufactured by Nippon Light Metal Co., Ltd.).

The resin composition includes, for example, the flame retardant in an amount of desirably from 5 to 50 phr,

and more desirably from 5 to 40 phr. Especially, the above-described aromatic condensed phosphate ester may be contained in the resin composition in an amount of for example from 5 to 40 phr, desirably from 5 to 30 phr and more desirably from 10 to 25 phr.

When the amount of the flame retardant is too small, it may be difficult for the resin molded article to have flame retardancy, whereas when the amount thereof is too large, the moldability of the resin composition may be reduced.

*Flame Retardant Aid*

Examples of the flame retardant aid include various kinds of known flame retardant aids, and among them, a favorable flame retardant aid is one selected from ammonium salt compounds, melamine salt compounds, and sulfate compounds.

By using any of those flame retardant aids in combination with a flame retardant, the resin molded article ensures a V-2 or better rating in UL-94 testing of the UL standard.

Herein, the flame retardant aid as the one selected from the above-mentioned compounds causes the resin molded article to foam or decompose, thereby causing fluidization. This facilitates the occurrence of a flame (or melt) dripping phenomenon (drip), so that the resin molded article ensures a V-2 rating or better in UL-94 testing of the UL standard.

The foaming of the resin molded article seems to make the resin components coarse, thereby easily causing dripping, and the decomposition of the molded article (decomposition of mainly cellulose acetate propionate as the resin component) seems to produce a low molecular product, thereby easily causing dripping.

Ammonium salt compounds are flame retardant aids having foaming properties and desirably foam at a temperature of from 250 to 400°C, for example. Specific examples of such ammonium salt compounds include ammonia-releasing ammonium salts (such as ammonium polyphosphate, ammonium phosphate, and guanidine compounds).

Melamine salt compounds are flame retardant aids having foaming properties and desirably foam at the temperature of from 250 to 400°C, for example. Specific examples of such melamine salt compounds include nitrogen gas-releasing melamine salts (such as melamine cyanurate and cyanurate-based dicarboxy cyanurate).

Sulfate compounds are acid catalyst-based flame retardant aids and desirably start to decompose at the temperature of from 250 to 400°C, for example. Specific examples of such sulfate compounds include melamine sulfate, melam sulfate, and dehydrated alum.

Among them, preferred are sulfate compounds (particularly melamine sulfate).

As the flame retardant aid, one selected from the ammonium salt compounds, the melamine salt compounds, and the sulfate compounds is included in the resin composition in an amount of desirably from 0.005 to 20 phr, more desirably from 0.005 to 15 phr, and still more desirably from 0.005 to 10 phr.

When the content of the flame retardant aid is too small, it may be difficult for the produced resin molded article to ensure a V-2 rating or better in UL-94 testing of the UL standard. Meanwhile, when the content thereof is too much, the moldability of the resin composition may be reduced.

*Anti-Drip Agent*

Examples of anti-drip agents include fluorine-based resins (such as polytetrafluoroethylene (PTFE) and tetrafluoroethylene-perfluoroalkoxyethylene copolymer (PFA)).

By using any of the anti-drip agents in combination with a flame retardant, the impact resistance of the resin molded article is improved. Using the anti-drip agent inhibits fluidization and the occurrence of a flame (or melt) dripping phenomenon (drip), thus resulting that the resin molded article easily achieves the flame retardancy of a V-1 or better rating in UL-94 testing of the UL standard.

The reason for this seems to be that the anti-drip agent is dispersed in a mesh pattern in the resin composition (the resin molded article).

The anti-drip agent is included in the resin composition, for example, in an amount of desirably from 0.01 to 5 phr, more desirably from 0.1 to 3 phr, and still more desirably from 0.1 to 0.5 phr.

When the content of the anti-drip agent is too small, the impact resistance of the resin molded article may be reduced, as well as it may be difficult for the resin molded article to achieve a V-1 or better rating in UL-94 testing of the UL standard. Meanwhile, an excessive content of the anti-drip agent may reduce the moldability of the resin composition.

*Other Components*

The resin composition according to the exemplary embodiment may include another component besides the above respective components within a range without deteriorating the advantages of the invention.

Examples of the other component include plasticizers, antioxidants, release agents, light resistant agents,

weather resistant agents, coloring agents, pigments, modifiers, antistatic agents, hydrolysis-resistant inhibitors, fillers, and reinforcing agents (such as glass fiber, carbon fiber, talc, clay, mica, glass flake, milled glass, glass beads, crystalline silica, alumina, silicon nitride, alumina nitride, and boron nitride).

The content of the other component included in the resin composition is, for example, desirably from 0 to 10 phr, and more desirably from 0 to 5 phr. Herein, the term "0 phr" means that no other component is included.

*Method for Producing Resin Composition*

The resin composition according to the present exemplary embodiment is produced by melt-kneading of the above respective components.

Herein, examples of the melt-kneading unit to be used include known units, such as a twin screw extruder, Henschel mixer, Banbury mixer, single screw extruder, multi-screw extruder, and co-kneader.

*Resin Molded Article*

The resin molded article according to the present exemplary embodiment of the invention is made of the resin composition according to the above-described exemplary embodiment of the invention. Specifically, the resin molded article according to the exemplary embodiment of the invention is produced by molding the resin composition of the above-described exemplary embodiment of the invention

Additionally, the resin composition according to the exemplary embodiment is molded, for example, by a molding method such as injection molding, extrusion molding, blow molding, thermal press molding, calendar molding, coating molding, cast molding, dipping molding, vacuum molding, or transfer molding, thereby obtaining the resin molded article according to the exemplary embodiment.

Herein, mold temperature (such as extrusion temperature or injection temperature) for the resin composition according to the above exemplary embodiment is, for example, desirably from 180 to 230°C.

When the mold temperature is extremely low, the moldability of the resin composition tends to be deteriorated, whereas when it is extremely high, the mechanical properties (particularly elongation) of the produced resin molded article are reduced and thereby the molded article tends to be hard and brittle.

Herein, even in the case where the resin composition includes polycarbonate, by incorporating therein a copolymer of an acrylonitrile-styrene polymer and a glycidyl compound as a compatibilizer, molding of the composition is achieved at a mold temperature within the above range, although the polycarbonate inherently requires a mold temperature of 240°C or higher.

The injection molding may be performed, for example, using a commercially available apparatus such as NEX 500, NEX 150, or NEX 70000 manufactured by Nissei Plastic Industrial Co., Ltd., or SE-50D manufactured by Toshiba Machine Co., Ltd. In this case, from the viewpoint of inhibiting resin decomposition, cylinder temperature is desirably from 170 to 230°C, and more desirably from 180 to 230°C. Additionally, from the viewpoint of productivity, mold temperature is desirably from 30 to 100°C, and more desirably from 30 to 60°C.

The resin molded article according to the exemplary embodiment is favorably used for various purposes such as electronic/electric apparatuses, home appliances, containers, and car interior materials. More specific examples of such purposes include housing and various components of home appliances and electronic/electric apparatuses, wrapping films, cases for CD-ROM and DVD, dinnerware, food trays, drink bottles, and pharmaceutical wrapping materials. Among them, the resin molded article according to the exemplary embodiment is favorably used for the components of electronic/electric apparatuses in particular.

Particularly, when the resin molded article according to the exemplary embodiment of the second invention has transparency, such as when no polycarbonate is included, the resin molded article is favorably applicable to a transparent component requiring transparency, such as a platen cover.

Fig. 1 is an exterior perspective view of an image forming apparatus showing one example of components of an electronic/electric apparatus including the resin molded article according to the exemplary embodiment, in which it is a view from the front side of the apparatus.

An image forming apparatus 100 of Fig. 1 is provided with front covers 120a and 120b on the front side of an apparatus main body 110. The front covers 120a and 120b are freely openable/closable such that an operator can do some operations inside the apparatus. Thereby, when toner is used up, the operator refills toner or replaces a used-up process cartridge with a new one, and when a paper jam occurs in the apparatus, the operator removes the jammed paper. Fig. 1 shows a state of the apparatus in which the front covers 120a and 120b are open.

On the top surface of the apparatus main body 110 are provided an operation panel 130 on which image formation-related conditions such as paper size and the number of copies to be printed are input by operations of the operator, and a copy glass 132 on which an original document to be read is placed. At the upper part of the apparatus main body 110 is provided an automatic document feeder 134 for feeding the original document onto the copy glass

132. Furthermore, the apparatus main body 110 also includes an image reading unit for scanning an image of the original document placed on the copy glass 132 to obtain image data indicating the document image. The image data obtained by the image reading unit is sent to an image forming unit through a control section. The image reading unit and the control section are housed in the housing 150 that forms a part of the apparatus main body 110. The image forming unit is provided as a detachable process cartridge 142 in the housing 150. The process cartridge 142 is detached by turning an operation lever 144.

In the housing 150 of the apparatus main body 110 is provided a toner container 146 with a toner outlet (feed opening) 148 from which toner is refilled. The apparatus main body 110 is configured so that toner contained in the toner container 146 can be supplied to an image developing unit.

Meanwhile, paper containing cassettes 140a, 140b, and 140c are provided in the lower part of the apparatus main body 110. Multiple carrying rollers, each of which is composed of a pair of rollers are arranged inside the apparatus main body 110, whereby a paper carrying path is formed to carry paper in the paper containing cassettes to the image forming unit located above. Paper sheets in each of the paper containing cassettes are picked up one by one by a paper pickup mechanism located near the end portion of the carrying path to be sent to the carrying path. A manual paper feed tray 136, also from which paper sheets are to be fed, is provided on a side surface of the apparatus main body 110.

An image is formed on paper sheets by the image forming unit, and then, the paper sheets with the image are sequentially transferred between two fixing rolls contacting with each other and supported by the housing 152 forming a part of the apparatus main body 110. After that, the paper sheets are ejected outside the apparatus main body 110. On a side of the apparatus main body 110 opposite to the side thereof where the paper feed tray 136 are provided multiple paper ejection trays 138 onto which the image-formed paper sheets are to be ejected.

In the image forming apparatus 100, the resin molded article according to the exemplary embodiment is used, for example, for the front covers 120a and 120b, the exterior of the process cartridge 142, the housing 150 and the housing 152.

## EXAMPLES

Hereinafter, the invention will be described in detail by referring to Examples, but the invention is not limited to those Examples.

*Examples (Ex.)101 to* 140 *and Comparative Examples (C.Ex.) 101 to 112*

The components shown in Tables 1 to 7 (quantity unit: "phr") are mixed and kneaded by a twin screw extruder (TEM 58SS, manufactured by Toshiba Machine Co., Ltd.) at a cylinder temperature of 210°C to obtain pellets of the resin composition.

The obtained pellets are injected into a mold in an injection molding machine (NEX 500, manufactured by Toshiba Machine Co., Ltd.) at the cylinder temperature of 210°C and at a mold temperature of 50°C to obtain ISO versatile dumbbell test pieces (compliant with the ISO 527 tensile test and the ISO 178 bending test; tested parts' thickness: 4 mm and width: 10 mm) and UL test pieces for UL-94 V testing (thickness: 0.8 mm and 1.6 mm).

*Evaluation*

*Content of Plant-Derived Material*

Regarding the resin composition used in each Example, the content of plant-derived material is calculated by the following formula.
Formula:

$$\text{Content of plant-derived material} = \text{weight of cellulose acetate propionate} \times (\text{weight of cellulose} / \text{weight of cellulose acetate propionate}) / \text{total weight}$$

*Transparency*

The obtained pellets of the resin composition are molded by a press molding apparatus FINE LABO PRESS M-1 (trade name, manufactured by Toyo Seiki Seisaku-Sho, Ltd.) to prepare testing sheets having a thickness of 100 μm.

Light transmittance of the testing sheets is measured by a UV-VIS spectrometer UV-1800 (trade name, manufactured by Shimadzu Co., Ltd.) to evaluate transparency.

Measurement wavelength is 550 nm.

In addition, in the Tables, the symbol "-" indicates “unmeasurable".

*Glossiness*

The obtained ISO versatile dumbbell test pieces are visually inspected to determine the presence or absence of glossiness.

*Flame Retardancy*

*UL-V Testing*

Using the UL test pieces for V-testing, according to a method based on the UL-94 HB testing, the UL-V testing is performed using a UL chamber (trade name, manufactured by Toyo Seiki Seisaku-sho, Ltd.). The test results show the ratings from V-0, V-1, V-2, to HB in the descending order of flame retardancy. The "failure" indicates a result below HB, which means burning of the test piece.

In addition, when no test pieces can be produced due to the failure of injection molding, the evaluation is abandoned since production is substantially impossible.

*Mechanical Properties*

*Tensile Strength and Elongation*

Using the ISO versatile dumbbell test pieces, according to the ISO 527, tensile strength and elongation are measured by a measurement apparatus: high-precision universal testing machine AUTOGRAPH AG-IS 5kN (trade name, manufactured by Shimadzu Co. Ltd.).

*Impact Resistance*

After notching of the ISO versatile dumbbell test pieces, using the notched test pieces, the Charpy impact test is performed to measure impact resistance according to the JIS-K7111 (2006) by a measurement apparatus DG-UB2 (trade name, manufactured by Toyo Seiki Seisaku-sho, Ltd.).

*Load Deflection Temperature (HDT)*

Using the ISO versatile dumbbell test pieces, according to the ISO 178 bending test, the load deflection temperature under a load of 1.8 MPa is measured by an HDT measurement apparatus HDT-3 (trade name, manufactured by Toyo Seiki Seisaku-sho, Ltd.).

*Wet Heat Resistance*

*Impact Resistance after Wet Heat Test*

The ISO versatile dumbbell test pieces are subjected to the following wet heat test and then, the impact resistance of the test pieces is measured as described above.

The wet heat test is performed by a wet heat tester THN 042PA (trade name, manufactured by ADVANTEC Co., Ltd.) under the conditions of 65°C, 85%RH and 400 hours.

*Dimensional Stability*

Before and after the above wet heat test of the ISO versatile dumbbell test pieces, measurements are performed to determine the dimensional changes (before the wet heat test / after the wet heat test) in the TD direction (width direction) of the dumbbell test pieces. Note that evaluation of the dimensional stability is performed in Examples 101 to 137 and Comparative Examples 101 to 106.

*Weld strength*

Using the ISO versatile dumbbell test pieces according to the ISO 527, tensile strength in the machine direction

and bending strength in the traverse direction are measured by the measurement apparatus: high-precision universal testing machine AUTOGRAPH AG-IS 5kN (trade name, manufactured by Shimadzu Co. Ltd.).

Examples 138 to 140 and Comparative Examples 107 to 112 are evaluated on the weld strength.

Table 1

| Table 1 | | | Ex. 101 | Ex. 102 | Ex. 103 | Ex. 104 | Ex. 105 | Ex. 106 | Ex. 107 | Ex. 108 | Ex. 109 | Ex. 110 |
|---|---|---|---|---|---|---|---|---|---|---|---|---|
| Formulation of resin composition | Resin | CAP482 | 50 | 50 | 70 | 70 | 70 | 95 | 95 | | | |
| | | TP360A40000-12 | | | | | | | | 70 | 70 | 70 |
| | | PA-756S | 50 | 50 | 30 | 30 | 30 | 5 | 5 | 30 | 30 | 30 |
| | | STYLAC AS783 | | | | | | | | | | |
| | Compatibilizer | MODIPER A4400 | 0.1 | 20 | 0.1 | 20 | 25 | 0.1 | 20 | 0.1 | 20 | 25 |
| | Resin | PANLITE TN7300 | | | | | | | | | | |
| | Flame retardant | PX-200 | | | | | | | | | | |
| | Total amount (phr) | | 100.1 | 120 | 100.1 | 120 | 125 | 100.1 | 120 | 100.1 | 120 | 125 |
| Injection temperature | | | 190 | 190 | 190 | 190 | 190 | 190 | 190 | 220 | 220 | 220 |

(continued)

| Table 1 | | | Ex. 101 | Ex. 102 | Ex. 103 | Ex. 104 | Ex. 105 | Ex. 106 | Ex. 107 | Ex. 108 | Ex. 109 | Ex. 110 |
|---|---|---|---|---|---|---|---|---|---|---|---|---|
| Evaluation | Transparency | | 75 | 81 | 82 | 88 | 89 | 89 | 91 | 87 | 93 | 93 |
| | Content of plant-derived material | | 26.0 | 21.7 | 36.4 | 30.3 | 29.1 | 49.4 | 41.2 | 32.0 | 26.7 | 25.8 |
| | Glossiness | | Non-glossy | Non-glossy | Non-glossy | Non-glossy | Non-glossy | Non-glossy | Non-glossy | Non-glossy | Non-glossy | Non-glossy |
| | Flame retardancy | | HB | HB | HB | HB | HB | HB | HB | HB | HB | HB |
| | Mechanical strength | Tensile strength (Mpa) | 45 | 51 | 43 | 51 | 39 | 43 | 50 | 40 | 44 | 36 |
| | | Elongation (%) | 21 | 15 | 26 | 18 | 27 | 36 | 26 | 45 | 36 | 37 |
| | | Impactresistance (J/cm) | 9 | 16 | 7 | 15 | 16 | 12 | 15 | 12 | 17 | 15 |
| | | Load deflection temperature HDT (°C) | 77 | 81 | 72 | 79 | 81 | 71 | 73 | 69 | 75 | 76 |
| | Wet heat resistance | Impactresistance after wet heat test (J/cm) | 77 | 81 | 82 | 85 | 86 | 86 | 88 | 76 | 89 | 88 |
| | | Dimensional stability (%) | 0.3 | 0.1 | 0.2 | 0.1 | 0.1 | 0.2 | 0.1 | 0.2 | 0.1 | 0.1 |

Table 2

| Table 2 | | | Ex. 111 | Ex. 112 | Ex. 113 | Ex. 114 | Ex. 115 | Ex. 116 | Ex. 117 | Ex. 118 | Ex.119 | Ex.120 |
|---|---|---|---|---|---|---|---|---|---|---|---|---|
| Formulation of resin composition | Resin | CAP482 | 70 | 70 | 70 | 50 | 50 | 70 | 70 | 70 | 95 | 95 |
| | | TP360A40000-12 | | | | | | | | | | |
| | | PA-756S | | | | | | | | | | |
| | | STYLAC AS783 | 30 | 30 | 30 | | | | | | | |
| | Compatibilizer | MODIPER A4400 | 0.1 | 20 | 25 | 0.1 | 20 | 0.1 | 20 | 25 | 0.1 | 20 |
| | Resin | PANLITE TN7300 | | | | 50 | 50 | 30 | 30 | 30 | 5 | 5 |
| | Flame retardant | PX-200 | | | | | | | | | | |
| | Total amount (phr) | | 100.1 | 120 | 125 | 100.1 | 120 | 100.1 | 120 | 125 | 100.1 | 120 |
| Injection temperature | | | 220 | 220 | 220 | 190 | 190 | 190 | 190 | 190 | 190 | 190 |
| Evaluation | Transparency | | 87 | 93 | 92 | - | - | - | - | - | - | - |
| | Content of plant-derived material | | 36.4 | 30.3 | 29.1 | 26.0 | 21.7 | 36.4 | 30.3 | 29.1 | 49.4 | 41.2 |
| | Glossiness | | Non-glossy | Non-glossy | Non-glossy | Non-glossy | Non-glossy | Non-glossy | Non-glossy | Non-glossy | Non-glossy | Non-glossy |
| | Flame retardancy | | HB | HB | HB | HB | HB | HB | HB | HB | HB | HB |
| | Mechanical strength | Tensile strength (Mpa) | 51 | 55 | 46 | 56 | 59 | 52 | 53 | 40 | 49 | 50 |
| | | Elongation (%) | 15 | 14 | 12 | 15 | 16 | 26 | 18 | 15 | 37 | 25 |
| | | Impact resistance (J/cm) | 7 | 11 | 10 | 18 | 25 | 15 | 22 | 20 | 12 | 15 |
| | | Load deflection temperature HDT (°C) | 89 | 92 | 90 | 95 | 98 | 89 | 92 | 92 | 82 | 85 |
| | Wet heat resistance | Impact resistance after wet heat test (J/cm) | 91 | 92 | 91 | 92 | 93 | 98 | 95 | 95 | 91 | 93 |
| | | Dimensional stability (%) | 0.1 | 0.1 | 0.1 | 0.2 | 0.1 | 0.2 | 0.1 | 0.1 | 0.2 | 0.1 |

Table 3

| Table 3 | | | Ex. 121 | Ex. 122 | Ex. 123 | Ex. 124 | Ex. 125 | Ex.126 | Ex. 127 | Ex. 128 | Ex. 129 | Ex.130 |
|---|---|---|---|---|---|---|---|---|---|---|---|---|
| Formulation of resin composition | Resin | CAP482 | 90 | 50 | 50 | 70 | 70 | 70 | 95 | 95 | | |
| | | TP360A40000-12 | | | | | | | | | 70 | 70 |
| | | PA-756S | 10 | 50 | 50 | 30 | 30 | 30 | 5 | 5 | 30 | 30 |
| | | STYLAC AS783 | | | | | | | | | | |
| | Compatibilizer | MODIPER A4400 | 5 | 0.1 | 20 | 0.1 | 20 | 25 | 0.1 | 0.1 | 0.1 | 20 |
| | Resin | PANLITE TN7300 | | | | | | | | | | |
| | Flame retardant | PX-200 | | 5 | 40 | 5 | 40 | 40 | 5 | 40 | 5 | 40 |
| | Total amount (phr) | | 105 | 105.1 | 160 | 105.1 | 160 | 165 | 105.1 | 140.1 | 105.1 | 160 |
| Injection temperature | | | 220 | 220 | 220 | 220 | 220 | 220 | 220 | 220 | 220 | 220 |

(continued)

| Table 3 | | | Ex. 121 | Ex. 122 | Ex. 123 | Ex. 124 | Ex. 125 | Ex.126 | Ex. 127 | Ex. 128 | Ex. 129 | Ex.130 |
|---|---|---|---|---|---|---|---|---|---|---|---|---|
| Evaluation | Transparency | | 88 | 81 | 88 | 89 | 95 | 95 | 90 | 96 | 92 | 96 |
| | Content of plant-derived material | | 44.6 | 24.7 | 16.3 | 34.6 | 22.8 | 22.1 | 47.0 | 35.3 | 30.5 | 20.0 |
| | Glossiness | | Non-glossy | Non-glossy | Non-glossy | Non-glossy | Non-glossy | Non-glossy | Non-glossy | Non-glossy | Non-glossy | Non-glossy |
| | Flame retardancy | | HB | V-2 | V-0 | V-2 | V-1 | V-1 | V-2 | V-1 | V-2 | V-1 |
| | Mechanical strength | Tensile strength (Mpa) | 46 | 42 | 48 | 40 | 56 | 39 | 41 | 44 | 40 | 42 |
| | | Elongation (%) | 33 | 23 | 21 | 18 | 15 | 22 | 45 | 36 | 21 | 36 |
| | | Impact resistance (J/cm) | 16 | 7 | 12 | 6 | 15 | 11 | 8 | 12 | 11 | 15 |
| | | Load deflection temperature HDT (°C) | 70 | 68 | 61 | 67 | 62 | 59 | 68 | 62 | 60 | 60 |
| | Wet heat resistance | Impact resistance after wet heat test (J/cm) | 90 | 88 | 79 | 81 | 71 | 71 | 81 | 78 | 101 | 100 |
| | | Dimensional stability (%) | 0.1 | 0.2 | 0.1 | 0.1 | 0.1 | 0.1 | 0.2 | 0.1 | 0.1 | 0.1 |

Table 4

| Table 4 | | | Ex. 131 | Ex. 132 | Ex. 133 | Ex. 134 | Ex. 135 | Ex. 136 | Ex. 137 |
|---|---|---|---|---|---|---|---|---|---|
| Formulation of resin composition | Resin | CAP482 | | 90 | | 70 | 70 | 70 | 70 |
| | | TP360A40000-12 | 70 | | 70 | | | | |
| | | PA-756S | 30 | 10 | 30 | | | | 30 |
| | | STYLAC AS783 | | | | 30 | | | |
| | Compatibilizer | MODIPER A4400 | 25 | 5 | 10 | 20 | 20 | 25 | 0.05 |
| | Resin | PANLITE TN7300 | | | | | 30 | 30 | |
| | Flame retardant | PX-200 | 40 | 20 | 20 | 30 | 20 | 20 | |
| | Total amount (phr) | | 165 | 135 | 130 | 150 | 140 | 145 | 100.05 |
| Injection temperature | | | 220 | 220 | 220 | 220 | 190 | 190 | 230 |
| Evaluation | Transparency | | 96 | 93 | 92 | 93 | - | - | 55 |
| | Content of plant-derived material | | 19.5 | 0.0 | 24.6 | 24.3 | 26.0 | 25.1 | 36.4 |
| | Glossiness | | Non-glossy | Non-glossy | Non-glossy | Non-glossy | Non-glossy | Non-glossy | Non-glossy |
| | Flame retardancy | | V-1 | V-2 | V-0 | V-1 | V-0 | V-0 | HB |
| | Mechanical strength | Tensile strength (Mpa) | 34 | 45 | 43 | 51 | 60 | 51 | 38 |
| | | Elongation (%) | 41 | 36 | 15 | 14 | 25 | 24 | 15 |
| | | Impact resistance (J/cm) | 12 | 17 | 11 | 9 | 18 | 17 | 8 |
| | | Load deflection temperature HDT (°C) | 60 | 66 | 61 | 82 | 88 | 88 | 62 |
| | Wet heat resistance | Impact resistance after wet heat test (J/cm) | 100 | 88 | 12 | 92 | 95 | 95 | 9 |
| | | Dimensional stability (%) | 0.1 | 0.2 | 0.1 | 0.1 | 0.1 | 0.1 | 1.2 |

Table 5

| Table 5 | | | Ex. 138 | Ex. 139 | Ex. 140 |
|---|---|---|---|---|---|
| Formulation of resin composition | Resin | CAP482 | 50 | 70 | 90 |
| | | TP360A40000-12 | | | |
| | | PA-756S | 50 | 30 | 10 |
| | | STYLAC AS783 | | | |
| | Compatibilizer | MODIPER A4400 | | | |
| | Resin | PANLITE TN7300 | | | |
| | Flame retardant | PX-200 | | | |
| | Total amount (phr) | | 100 | 100 | 100 |
| Injection temperature | | | 230 | 230 | 230 |
| Evaluation | Transparency | | 38 | 55 | 61 |
| | Content of plant-derived material | | 26.0 | 36.4 | 46.8 |
| | Glossiness | | Non-glossy | Non-glossy | Non-glossy |
| | Flame retardancy | | HB | HB | HB |
| | Mechanical strength | Tensile strength (Mpa) | 37 | 37 | 37 |
| | | Elongation (%) | 11 | 16 | 36 |
| | | Impact resistance (J/cm) | 7 | 8 | 16 |
| | | Load deflection temperature HDT (°C) | 62 | 62 | 69 |
| | Wet heat resistance | Impact resistance after wet heat test (J/cm) | 9 | 9 | 68 |
| | Weld strength | Weld strength (tension) | 35 | 35 | 37 |
| | | Weld strength (bending) | 60 | 61 | 62 |

Table 6

| Table 6 | | | C.Ex. 101 | C.Ex. 102 | C.Ex. 103 | C.Ex. 104 | C.Ex. 105 | C.Ex. 106 |
|---|---|---|---|---|---|---|---|---|
| Formulation of resin composition | Resin | CAP482 | 100 | | | 30 | | 70 |
| | | TP360A40000-12 | | 100 | | | 30 | |
| | | PA-756S | | | 100 | 70 | 70 | |
| | | STYLAC AS783 | | | | | | |
| | Compatibilizer | MODIPER A4400 | | | | | | |
| | Resin | PANLITE TN7300 | | | | | | 30 |
| | Flame retardant | PX-200 | | | | | | |
| | Total amount (phr) | | 100 | 100 | 100 | 100 | 100 | 100 |
| Injection temperature | | | 220 | 180 | 280 | 230 | 230 | - |
| Evaluation | Transparency | | 93 | 95 | 8 | 21 | 22 | - |
| | Content of plant-derived material | | 52.0 | 46.0 | 0.0 | 15.6 | 0.0 | 36.4 |
| | Glossiness | | Glossy | Glossy | Non-glossy | Non-glossy | Non-glossy | Failure of injection molding |
| | Flame retardancy | | HB | Failure | V-2 | HB | HB | |
| | Mechanical strength | Tensile strength (Mpa) | 52 | 32 | 60 | 35 | 29 | |
| | | Elongation (%) | 12 | 46 | 110 | 7 | 15 | |
| | | Impact resistance (J/cm) | 7 | 25 | 58 | 7 | 10 | |
| | | Load deflection temperature HDT (°C) | 102 | 82 | 120 | 69 | 51 | |
| | Wet heat resistance | Impact resistance after wet heat test (J/cm) | 10 | 30 | 58 | 28 | 50 | |
| | | Dimensional stability (%) | 1.4 | 1.3 | 0 | 1 | 1 | |

Table 7

| Table 7 | | | C.Ex. 107 | C.Ex. 108 | C.Ex. 109 | C.Ex. 110 | C.Ex. 111 | C.Ex.112 |
|---|---|---|---|---|---|---|---|---|
| Formulation of resin composition | Resin | CAP482 | 100 | | | 30 | | 97 |
| | | TP360A40000-12 | | 100 | | | 30 | |
| | | PA-756S | | | 100 | 70 | 70 | 3 |
| | | STYLAC AS783 | | | | | | |
| | Compatibilizer | MODIPER A4400 | | | | | | |
| | Resin | PANLITE TN7300 | | | | | | |
| | Flame retardant | PX-200 | | | | | | |
| | Total amount (phr) | | 100 | 100 | 100 | 100 | 100 | 100 |
| Injection temperature | | | 220 | 180 | 280 | 230 | 220 | 220 |
| Evaluation | Transparency | | 93 | 95 | 8 | 21 | 21 | 57 |
| | Content of plant-derived material | | 52.0 | 46.0 | 0.0 | 15.6 | 13.8 | 50.4 |
| | Glossiness | | Glossy | Glossy | Non-glossy | Non-glossy | Non-glossy | Glossy |
| | Flame retardancy | | HB | Failure | V-2 | HB | HB | HB |
| | Mechanical strength | Tensile strength (Mpa) | 52 | 32 | 60 | 35 | 29 | 35 |
| | | Elongation (%) | 12 | 46 | 110 | 7 | 15 | 11 |
| | | Impact resistance (J/cm) | 7 | 25 | 58 | 7 | 10 | 2 |
| | | Load deflection temperature HDT (°C) | 102 | 82 | 120 | 69 | 51 | 60 |
| | Wet heat resistance | Impact resistance after wet heat test (J/cm) | 10 | 30 | 58 | 28 | 50 | 33 |
| | Weld strength | Weld strength (tension) | 30 | 25 | 41 | 34 | 26 | 8 |
| | | Weld strength (bending) | 30 | 26 | 50 | 43 | 31 | 3 |

The above results show that Examples 138 to 140 have the improved weld strength as compared to Comparative Examples 107 to 112.

Additionally, the results show that Examples 101 to 136 have the improved dimensional stability as compared to Example 13 7 and Comparative Examples 101 to 106

It is also seen that transparency is present in the present Examples each of which contains cellulose ester and acrylonitrile-butadiene-styrene resin, but without polycarbonate.

The details of the kinds of materials shown in Tables 1 to 7 are as follows.

*Resin*

CAP482 (trade name, manufactured by Eastman Chemical Co., Ltd.): cellulose acetate propionate
TP360A40000-12 (trade name, manufactured by Eastman Chemical Co., Ltd.): a plasticizer-containing cellulose acetate propionate
PA-7565 (trade name, manufactured by ChiMei Corp.): ABS resin
STYLAC AS783 (trade name, manufactured by Asahi Kasei Chemicals Corp.): AS resin
PANLITE TN7300 (trade name, manufactured by Teijin Chemicals Ltd.): polycarbonate/ABS resin

*Compatibilizer*

MODIPER A4400 (trade name, manufactured by Nippon Oil & Fats Co. Ltd.): a graft copolymer of an acrylonitrile-styrene polymer and an ethylene glycidyl methacrylate polymer

*Flame Retardant*

PX-200 (trade name, manufactured by Daihachi Chemical Industry Co., Ltd.): aromatic condensed phosphate ester compound

*Examples (Ex.) 201 to 234 and Comparative Examples (C.Ex.) 201 to 210*

The components shown in Tables 8 to 12 (quantity unit: "phr") are mixed and kneaded by a twin screw extruder (TEM 58SS, manufactured by Toshiba Machine Co., Ltd.) at a cylinder temperature of 210°C to obtain pellets of the resin composition.

The obtained pellets are injected into a mold in an injection molding machine (NEX 500, manufactured by Toshiba Machine Co., Ltd.) at the cylinder temperature of 210°C and at a mold temperature of 50°C to obtain ISO versatile dumbbell test pieces (compliant with the ISO 527 tensile test and the ISO 178 bending test; tested parts' thickness: 4 mm and width: 10 mm) and UL test pieces for UL-94 V testing (thickness: 0.8 mm and 1.6 mm).

*Evaluation*

Evaluation of content of plant-derived material, glossiness, flame retardancy, mechanical properties (tensile strength, elongation, impact resistance, load deflection temperature (HDT)), and wet heat resistance (impact resistance after wet heat test, dimensional stability) are performed in the same manner as those described above.

Table 8

| Table 8 | | | Ex. 201 | Ex. 202 | Ex. 203 | Ex. 204 | Ex. 205 | Ex. 206 | Ex. 207 | Ex. 208 |
|---|---|---|---|---|---|---|---|---|---|---|
| Formulation of resin composition | Resin | CAP482 | 50 | 50 | 70 | 70 | 80 | 80 | | |
| | | TP360A 40000-12 | | | | | | | 70 | 70 |
| | | CALIBRE 200 | 50 | 50 | 30 | 30 | 20 | 20 | 30 | 30 |
| | Compatibilizer | MODIPER A4400 | 5 | | 5 | | 5 | | 5 | |
| | | MODIPER CL430G | | 20 | | 20 | | 20 | | 20 |
| | | LOTADER 8900 | | | | | | | | |
| | Flame retardant | PX-200 | | | | | | | | |
| | | CR-741 | | | | | | | | |
| | | PX-202 | | | | | | | | |
| | Flame retardant aid | APINON 901 | | | | | | | | |
| | Anti-drip agent | FA-500 | | | | | | | | |
| | Total amount (phr) | | 105 | 120 | 105 | 120 | 105 | 120 | 105 | 120 |
| Injection temperature | | | 210 | 210 | 210 | 210 | 210 | 210 | 210 | 220 |

(continued)

| Table 8 | | | Ex. 201 | Ex. 202 | Ex. 203 | Ex. 204 | Ex. 205 | Ex. 206 | Ex. 207 | Ex. 208 |
|---|---|---|---|---|---|---|---|---|---|---|
| Evaluation | Content of plant-derived material | | 24.8 | 21.7 | 34.7 | 30.3 | 39.6 | 34.7 | 30.5 | 26.7 |
| | Glossiness | | Non-glossy | Non-glossy | Non-glossy | Non-glossy | Non-glossy | Non-glossy | Non-glossy | Non-glossy |
| | Flame retardancy | | HB | Failure | V-2 | HB | HB | HB | HB | HB |
| | Mechanical strength | Tensile strength (Mpa) | 54 | 50 | 51 | 49 | 46 | 45 | 44 | 43 |
| | | Elongation (%) | 21 | 39 | 18 | 42 | 17 | 26 | 21 | 36 |
| | | Impact resistance (J/cm) | 9 | 16 | 7 | 15 | 8 | 15 | 8 | 17 |
| | | Load deflection temperature HDT (°C) | 102 | 98 | 99 | 92 | 89 | 85 | 78 | 75 |
| | Wet heat resistance | Impact resistance after wet heat test (J/cm) | 10 | 21 | 9 | 17 | 10 | 17 | 11 | 20 |
| | | Dimensional stability (%) | 0.3 | 0.1 | 0.2 | 0.1 | 0.2 | 0.1 | 0.1 | 0.1 |

Table 9

| Table 9 | | | Ex. 209 | Ex. 210 | Ex. 211 | Ex. 212 | Ex. 213 | Ex. 214 | Ex. 215 | Ex. 216 | Ex. 217 | Ex. 218 |
|---|---|---|---|---|---|---|---|---|---|---|---|---|
| Formulation of resin composition | Resin | CAP482 | 50 | 50 | 50 | 50 | 50 | 50 | 70 | 70 | 70 | 80 |
| | | TP360A40000-12 | | | | | | | | | | |
| | | CALIBRE 200 | 50 | 50 | 50 | 50 | 50 | 50 | 30 | 30 | 30 | 20 |
| | Compatibilizer | MODIPER A4400 | 5 | 5 | 5 | 5 | 5 | 5 | 5 | | | 5 |
| | | MODIPER CL430G | | | | | | | | 20 | 20 | |
| | | LOTADER 8900 | | | | | | | | | | |
| | Flame retardant | PX-200 | 5 | 40 | | | 30 | 40 | 5 | 40 | 40 | 5 |
| | | CR-741 | | | 40 | | | | | | | |
| | | PX-202 | | | | 40 | | | | | | |
| | Flame retardant aid | APINON 901 | | | | | | | | | | |
| | Anti-drip agent | FA-500 | | | | | 0.1 | 0.5 | | | 0.1 | |
| | Total amount (phr) | | 110 | 145 | 145 | 145 | 135.1 | 145.5 | 110 | 160 | 160.1 | 110 |
| Injection temperature | | | 210 | 210 | 210 | 210 | 210 | 210 | 210 | 210 | 210 | 220 |

(continued)

| Table 9 | | | Ex. 209 | Ex. 210 | Ex. 211 | Ex. 212 | Ex. 213 | Ex. 214 | Ex. 215 | Ex. 216 | Ex. 217 | Ex. 218 |
|---|---|---|---|---|---|---|---|---|---|---|---|---|
| Evaluation | Content of plant-derived material | | 23.6 | 17.9 | 17.9 | 17.9 | 19.2 | 17.9 | 33.1 | 22.8 | 22.7 | 37.8 |
| | Glossiness | | Non-glossy | Non-glossy | Non-glossy | Non-glossy | Non-glossy | Non-glossy | Non-glossy | Non-glossy | Non-glossy | Non-glossy |
| | Flame retardancy | | V-2 | V-2 | HB | HB | V-0 | V-0 | V-2 | V-2 | V-0 | V-2 |
| | Mechanical strength | Tensile strength (Mpa) | 52 | 42 | 40 | 53 | 45 | 42 | 50 | 41 | 43 | 46 |
| | | Elongation (%) | 23 | 28 | 30 | 2 | 21 | 21 | 18 | 15 | 25 | 17 |
| | | Impactresistance (J/cm) | 8 | 7 | 2 | 1 | 11 | 12 | 6 | 5 | 8 | 8 |
| | | Load deflection temperature HDT (°C) | 95 | 68 | 49 | 72 | 71 | 69 | 88 | 62 | 62 | 89 |
| | Wet heat resistance | Impactresistance after wet heat test (J/cm) | 9 | 8 | 2 | 2 | 13 | 14 | 8 | 7 | 10 | 10 |
| | | Dimensional stability (%) | 0.2 | 0.1 | 0.1 | 0.1 | 0.1 | 0.1 | 0.1 | 0.1 | 0.1 | 0.2 |

Table 10

| Table 10 | | | Ex. 219 | Ex. 220 | Ex. 221 | Ex. 222 | Ex. 223 | Ex. 224 | Ex. 225 | Ex. 226 | Ex. 227 |
|---|---|---|---|---|---|---|---|---|---|---|---|
| Formulation of resin composition | Resin | CAP482 | 80 | 80 | | | | | | | |
| | | TP360A40000-12 | | | 70 | 70 | 70 | 70 | 70 | 70 | 70 |
| | | CALIBRE 200 | 20 | 20 | 30 | 30 | 30 | 30 | 30 | 30 | 30 |
| | Compatibilizer | MODIPER A4400 | 5 | 5 | 5 | | 5 | 5 | | | |
| | | MODIPER CL430G | | | | 20 | | | 20 | 20 | 20 |
| | | LOTADER 8900 | | | | | | | | | |
| | Flame retardant | PX-200 | 40 | 40 | 5 | 40 | 5 | 5 | 40 | 20 | 20 |
| | | CR-741 | | | | | | | | 20 | |
| | | PX-202 | | | | | | | | | 20 |
| | Flame retardant aid | APINON 901 | | | | | 0.005 | 20 | | | |
| | Anti-drip agent | FA-500 | | 0.1 | | | | | 0.1 | 0.1 | 0.1 |
| | Total amount (phr) | | 145 | 145.1 | 110 | 160 | 110.005 | 130 | 160.1 | 160.1 | 160.1 |
| Injection temperature | | | 210 | 210 | 210 | 210 | 210 | 210 | 210 | 210 | 220 |

(continued)

| Table 10 | | | Ex. 219 | Ex. 220 | Ex. 221 | Ex. 222 | Ex. 223 | Ex. 224 | Ex. 225 | Ex. 226 | Ex. 227 |
|---|---|---|---|---|---|---|---|---|---|---|---|
| Evaluation | Content of plant-derived material | | 28.7 | 28.7 | 29.1 | 20.0 | 29.1 | 24.6 | 20.0 | 20.0 | 20.0 |
| | Glossiness | | Non-glossy | Non-glossy | Non-glossy | Non-glossy | Non-glossy | Non-glossy | Non-glossy | Non-glossy | Non-glossy |
| | Flame retardancy | | V-2 | V-0 | V-2 | V-2 | V-2 | V-2 | V-0 | V-0 | V-0 |
| | Mechanical strength | Tensile strength (Mpa) | 40 | 43 | 44 | 42 | 44 | 50 | 45 | 43 | 43 |
| | | Elongation (%) | 12 | 15 | 21 | 36 | 21 | 11 | 36 | 15 | 11 |
| | | Impact resistance (J/cm) | 6 | 8 | 8 | 11 | 8 | 7 | 17 | 11 | 8 |
| | | Load deflection temperature HDT (°C) | 62 | 63 | 76 | 63 | 76 | 89 | 66 | 61 | 72 |
| | Wet heat resistance | Impact resistance after wet heat test (J/cm) | 7 | 9 | 11 | 12 | 11 | 8 | 20 | 12 | 9 |
| | | Dimensional stability (%) | 0.1 | 0.1 | 0.1 | 0.1 | 0.1 | 0.1 | 0.1 | 0.1 | 0.1 |

Table 11

| Table 11 | | | C.Ex. 201 | C.Ex. 202 | C.Ex. 203 | C.Ex. 204 | C.Ex. 205 | C.Ex. 206 | C.Ex. 207 | C.Ex. 208 | C.Ex. 209 |
|---|---|---|---|---|---|---|---|---|---|---|---|
| Formulation of resin composition | Resin | CAP482 | 100 | | | 30 | 50 | 70 | 90 | | 50 |
| | | TP360A40000-12 | | 100 | | | | | | 30 | |
| | | CALIBRE 200 | | | 100 | 70 | 50 | 30 | 10 | 70 | 50 |
| | Compatibilizer | MODIPER A4400 | | | | | | | | | 3 |
| | | MODIPER CL430G | | | | | | | | | |
| | | LOTADER 8900 | | | | | | | | | |
| | Flame retardant | PX-200 | | | | | | | | | |
| | | CR-741 | | | | | | | | | |
| | | PX-202 | | | | | | | | | |
| | Flame retardant aid | APINON 901 | | | | | | | | | |
| | Anti-drip agent | FA-500 | | | | | | | | | |
| | Total amount (phr) | | 100 | 100 | 100 | 100 | 100 | 100 | 100 | 100 | 103 |
| Injection temperature | | | 220 | 180 | 280 | 210 | 210 | 210 | 210 | 210 | 210 |

(continued)

| Table 11 | | | C.Ex. 201 | C.Ex. 202 | C.Ex. 203 | C.Ex. 204 | C.Ex. 205 | C.Ex. 206 | C.Ex. 207 | C.Ex. 208 | C.Ex. 209 |
|---|---|---|---|---|---|---|---|---|---|---|---|
| Evaluation | Content of plant-derived material | | 52.0 | 46.0 | 0.0 | 15.6 | 26.0 | 36.4 | 46.8 | 13.7 | 25.2 |
| | Glossiness | | Glossy | Glossy | Non-glossy | Failure of injection molding | Failure of injection molding | Failure of injection molding | Failure of injection molding | Failure of injection molding | Failure of injection molding |
| | Flame retardancy | | HB | Failure | V-2 | | | | | | |
| | Mechanical strength | Tensile strength (Mpa) | 52 | 32 | 60 | | | | | | |
| | | Elongation (%) | 12 | 46 | 110 | | | | | | |
| | | Impact resistance (J/cm) | 7 | 25 | 58 | | | | | | |
| | | Load deflection temperature HDT (°C) | 102 | 82 | 120 | | | | | | |
| | Wet heat resistance | Impact resistance after wet heat test (J/cm) | 10 | 30 | 58 | | | | | | |
| | | Dimensional stability (%) | 1.4 | 1.3 | 0 | | | | | | |

Table 12

| Table 12 | | | Ex. 228 | C.Ex. 210 | Ex. 229 | Ex. 230 | Ex. 231 | Ex. 232 | Ex. 233 | Ex. 234 |
|---|---|---|---|---|---|---|---|---|---|---|
| Formulation of resin composition | Resin | CAP482 | 50 | 50 | 70 | 70 | 70 | 70 | 70 | 70 |
| | | TP360A40000-12 | | | | | | | | |
| | | CALIBRE 200 | 50 | 50 | 30 | 30 | 30 | 30 | 30 | 30 |
| | Compatibilizer | MODIPER A4400 | 25 | | 10 | 10 | 10 | 10 | 10 | 10 |
| | | MODIPER CL430G | | | | | | | | |
| | | LOT ADER 8900 | | 10 | | | | | | |
| | Flame retardant | PX-200 | | | 3 | 50 | | 3 | 3 | 10 |
| | | CR-741 | | | | | | | | 15 |
| | | PX-202 | | | | | 50 | | | |
| | Flame retardant aid | APINON 901 | | | | | | 0.0005 | 25 | |
| | Anti-drip agent | FA-500 | | | | | | | | |
| | Total amount (phr) | | 125 | 110 | 113 | 160 | 160 | 113.0005 | 138 | 135 |
| Injection temperature | | | 210 | 210 | 210 | 210 | 210 | 210 | 210 | 210 |

(continued)

| Table 12 | | | Ex. 228 | C.Ex. 210 | Ex. 229 | Ex. 230 | Ex. 231 | Ex. 232 | Ex. 233 | Ex. 234 |
|---|---|---|---|---|---|---|---|---|---|---|
| Evaluation | Content of plant-derived material | | 23.6 | 23.6 | 32.2 | 22.8 | 22.8 | 32.2 | 26.4 | 27.0 |
| | Glossiness | | Non-glossy | Non-glossy | Non-glossy | Non-glossy | Non-glossy | Non-glossy | Non-glossy | Non-glossy |
| | Flame retardancy | | HB | HB | Failure | V-2 | V-2 | Failure | HB | V-2 |
| | Mechanical strength | Tensile strength (Mpa) | 32 | 38 | 42 | 45 | 50 | 42 | 50 | 41 |
| | | Elongation (%) | 41 | 26 | 10 | 1 | 1 | 10 | 1 | 10 |
| | | Impact resistance (J/cm) | 9 | 7 | 8 | 1 | 1 | 8 | 1 | 1 |
| | | Load deflection temperature HDT (°C) | 103 | 100 | 83 | 44 | 68 | 83 | 68 | 48 |
| | Wet heat resistance | Impact resistance after wet heat test (J/cm) | 10 | 7 | 10 | 1 | 1 | 10 | 1 | 1 |
| | | Dimensional stability (%) | 0.1 | 0.9 | 0.1 | 0.1 | 0.1 | 0.1 | 0.1 | 0.1 |

The details of Tables 8 to 12 are as follows.

*Resin*

CAP482 (trade name, manufactured by Eastman Chemical Co., Ltd.): cellulose acetate propionate
TP360A40000-12 (trade name, manufactured by Eastman Chemical Co., Ltd.): cellulose acetate propionate
CALIBRE 200 (trade name, manufactured by Sumitomo Dow Co., Ltd.): polycarbonate (weight average molecular weight: about 26000)

*Compatibilizer*

MODIPER A4400 (trade name, manufactured by Nippon Oil & Fats Co. Ltd.): a graft copolymer of an acrylonitrile-styrene polymer and an ethylene-glycidyl methacrylate polymer
MODIPER CL430G (trade name, manufactured by Nippon Oil & Fats Co. Ltd.): a copolymer of a graft polymer of aromatic polycarbonate and an acrylonitrile-styrene polymer and glycidyl methacrylate
LOTADER 8900 (trade name, manufactured by Arkema Co. Ltd.): a copolymer of ethylene, methyl acrylate, and glycidyl methacrylate (GMA)

*Flame Retardant*

PX-200 (trade name, manufactured by Daihachi Chemical Industry Co., Ltd.): aromatic condensed phosphate ester compound represented by Structural Formula (1)
CR-741 (trade name, manufactured by Daihachi Chemical Industry Co., Ltd.): see the structural formula below.
PX-202 (trade name, manufactured by Daihachi Chemical Industry Co., Ltd.): see the structural formula below.

*Flame Retardant Aid*

APINON 901 (trade name, manufactured by Sanwa Chemical Co., Ltd.): melamine sulfate

*Anti-Drip Agent*

FA-500 (trade name, manufactured by Daikin Industries Ltd.): PTFE (polytetrafluoroethylene resin)

CR－741

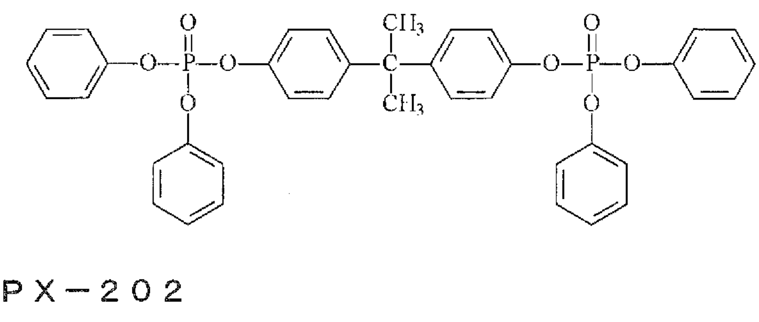

PX－202

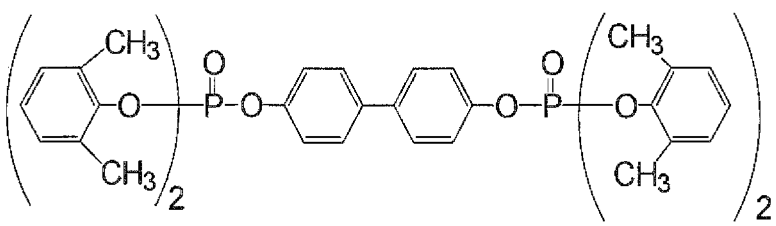

In Examples 201 to 234, in addition to polycarbonate and cellulose acetate propionate, the copolymer of an acrylonitrile-styrene polymer and a glycidyl compound is used as the compatibilizer, whereby the dimensional stability is improved as compared to the Comparative Examples 201 to 210. Furthermore, by adding specific amounts of specific flame retardants, the flame retardancy of a V-2 or better rating is obtained. Additionally, by adding an anti-drip agent, impact resistance strength is improved.

The above results show that the resin composition according to Examples 201 to 234 provides an excellent dimensional stability to a molded article of the resin composition, so that the resin composition is suitable to produce a housing of an image forming apparatus. Additionally, the resin molded article according to Examples 201 to 234 has an excellent dimensional stability and is suitable for the housing of an image forming apparatus.

It is intended that the scope of the invention be defined by the following claims and their equivalents.

## Claims

1. A resin composition comprising:

   cellulose ester in an amount of from 50 to 95 phr; and
   an acrylonitrile-styrene copolymer-containing resin in an amount of from 5 to 50 phr,
   wherein the term "phr" indicates the abbreviation of "per hundred resin" and represent "parts by weight" with respect to 100 parts by weight of the entire resin component.

2. The resin composition according to claim 1, further comprising a copolymer of an acrylonitrile-styrene polymer and a glycidyl compound in an amount of 0.1 phr or more.

3. The resin composition according to claim 1 or 2, further comprising a polycarbonate, wherein a total amount of the polycarbonate and the acrylonitrile-styrene copolymer-containing resin is from 20 to 50 phr.

4. The resin composition according to claim 2 or 3, wherein the amount of the copolymer of an acrylonitrile-styrene polymer and a glycidyl compound is from 0.1 to 20 phr.

5. The resin composition according to any one of claims 1 to 4, wherein the cellulose ester comprises cellulose acetate propionate.

6. The resin composition according to any one of claims 1 to 5, further comprising an aromatic condensed phosphate ester compound represented by the following Structural Formula (1) in an amount of from 5 to 40 phr:

Structural Formula (1)

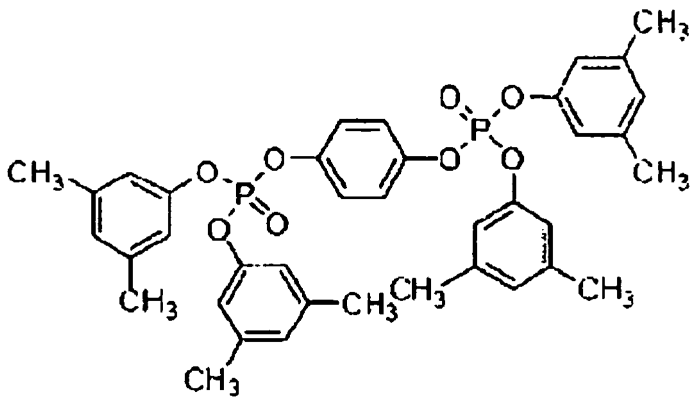

7. The resin composition according to any one of claims 1 to 6, further comprising an ammonium salt compound, a melamine salt compound, or a sulfate compound in an amount of from 0.005 to 20 phr.

8. The resin composition according to any one of claims 1 to 7, further comprising an anti-drip agent being a fluorine-based resin.

**9.** A resin molded article comprising:

cellulose ester in an amount of from 50 to 95 phr; and
an acrylonitrile-styrene copolymer-containing resin in an amount of from 5 to 50 phr.

**10.** The resin molded article according to claim 9, further comprising a copolymer of an acrylonitrile-styrene polymer and a glycidyl compound in an amount of 0.1 phr or more

**11.** The resin molded article according to claim 9 or 10, further comprising a polycarbonate, wherein a total amount of the polycarbonate and the acrylonitrile-styrene copolymer-containing resin is from 20 to 50 phr.

**12.** The resin molded article according to claim 10 or 11, wherein the amount of the copolymer of an acrylonitrile-styrene polymer and a glycidyl compound is from 0.1 to 20 phr.

**13.** The resin molded article according to any one of claims 9 to 12, wherein the cellulose ester comprises cellulose acetate propionate.

**14.** The resin molded article according to any one of claims 9 to 13 further comprising an aromatic condensed phosphate ester compound represented by the following Structural Formula (1) in an amount of from 5 to 40 phr:

Structural Formula (1)

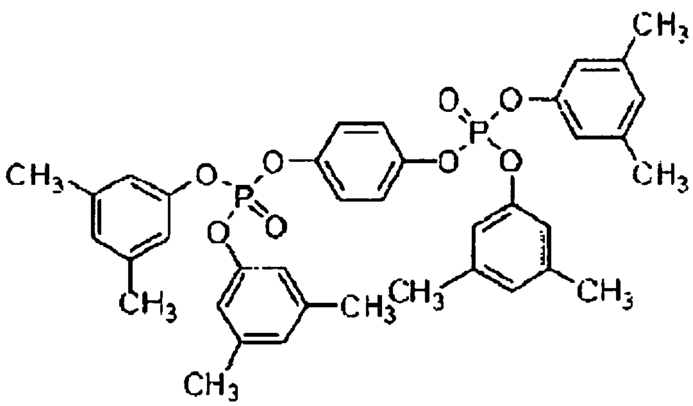

**15.** The resin molded article according to any one of claims 9 to 14, further comprising an ammonium salt compound, a melamine salt compound, or a sulfate compound in an amount of from 0.005 to 20 phr.

**16.** The resin molded article according to any one of claims 9 to 15, further comprising an anti-drip agent being a fluorine-based resin.

**Patentansprüche**

**1.** Harzzusammensetzung, umfassend
Celluloseester in einer Menge von 50 bis 95 phr; und
ein Acrylnitril-Styrol-Copolymer enthaltendes Harz in einer Menge von 5 bis 50 phr,
wobei der Begriff "phr" die Abrürzung für "per hundred resin" angibt und "Gewichtsanteile" in Bezug auf 100 Gewichtsanteile der gesamten Harzkomponente darstellt.

**2.** Harzzusammensetzung gemäß Anspruch 1, zudem umfassend ein Copolymer eines Acrylnitril-Styrol-Copolymers und einer Glycidyl-Verbindung in einer Menge von 0,1 phr oder mehr.

**3.** Harzzusammensetzung gemäß Anspruch 1 oder 2, zudem umfassend ein Polycarbonat, wobei eine Gesamtmenge des Polycarbonats und des Acrylnitril-Styrol-Copolymer enthaltenden Harzes von 20 bis 50 phr ist.

**4.** Harzzusammensetzung gemäß Anspruch 2 oder 3, wobei die Menge des Copolymers eines Acrylnitril-Styrol-Polymers und einer Glycidyl-Verbindung von 0,1 bis 20 phr ist.

5. Harzzusammensetzung gemäß irgendeinem der Ansprüche 1 bis 4, wobei das Celluloseester Celluloseacetatpropionat umfasst.

6. Harzzusammensetzung gemäß irgendeinem der Ansprüche 1 bis 5, zudem umfassend eine aromatische kondensierte Phosphatesterverbindung, dargestellt durch die folgende Strukturformel (1) in einer Menge von 5 bis 40 phr: Strukturformel (1)

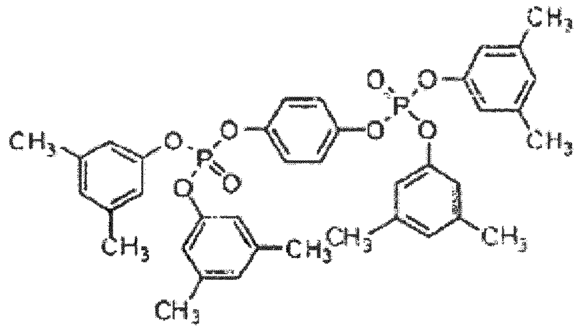

7. Harzzusammensetzung gemäß irgendeinem der Ansprüche 1 bis 6, zudem umfassend eine Ammoniumsalzverbindung, eine Melaminsalzverbindung oder eine Sulfatverbindung in einer Menge von 0,005 bis 20 phr.

8. Harzzusammensetzung gemäß irgendeinem der Ansprüche 1 bis 7, zudem umfassend ein Antitropfmittel, das ein fluorbasiertes Harz ist.

9. Aus Harz gegossener Gegenstand, umfassend
Celluloseester in einer Menge von 50 bis 95 phr; und
ein Acrylnitril-Styrol-Copolymer enthaltendes Harz in einer Menge von 5 bis 50 phr.

10. Aus Harz gegossener Gegenstand gemäß Anspruch 9, zudem umfassend ein Copolymer eines Acrylnitril-Styrol-Copolymers und einer Glycidyl-Verbindung in einer Menge von 0,1 phr oder mehr.

11. Aus Harz gegossener Gegenstand gemäß Anspruch 9 oder 10, zudem umfassend ein Polycarbonat, wobei eine Gesamtmenge des Polycarbonats und des Acrylnitril-Styrol-Copolymer enthaltenden Harzes von 20 bis 50 phr ist.

12. Aus Harz gegossener Gegenstand gemäß Anspruch 10 oder 11, wobei die Menge des Copolymers eines Acrylnitril-Styrol-Polymers und einer Glycidyl-Verbindung von 0,1 bis 20 phr ist.

13. Aus Harz gegossener Gegenstand gemäß irgendeinem der Ansprüche 9 bis 12, wobei das Celluloseester Celluloseacetatpropionat umfasst.

14. Aus Harz gegossener Gegenstand gemäß irgendeinem der Ansprüche 9 bis 13, zudem umfassend eine aromatische kondensierte Phosphatesterverbindung, dargestellt durch die folgende Strukturformel (1) in einer Menge von 5 bis 40 phr:

Strukturformel (1)

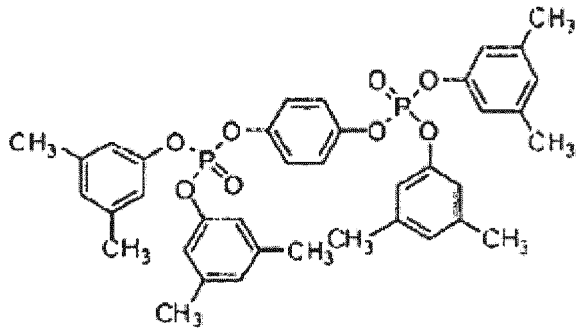

15. Aus Harz gegossener Gegenstand gemäß irgendeinem der Ansprüche 9 bis 14, zudem umfassend eine Ammoniumsalzverbindung, eine Melaminsalzverbindung oder eine Sulfatverbindung in einer Menge von 0,005 bis 20 phr.

16. Aus Harz gegossener Gegenstand gemäß irgendeinem der Ansprüche 9 bis 15, zudem umfassend ein Antitropfmittel, das ein fluorbasiertes Harz ist.

**Revendications**

1. Une composition de résine contenant :

   un ester de cellulose dans une quantité allant de 50 à 95 pcr ; et
   une résine contenant un copolymère acrylonitrile-styrène dans une quantité allant de 5 à 50 pcr ;
   où le terme "pcr" désigne l'abréviation de "pour cent résine" et représente des "parties en poids" par rapport à 100 parties en poids du composant de résine entier.

2. La composition de résine selon la revendication 1, contenant en outre un copolymère d'un polymère acrylonitrile-styrène et d'un composé glycidylique dans une quantité de 0,1 pcr ou plus.

3. La composition de résine selon la revendication 1 ou 2, contenant en outre un polycarbonate, où une quantité totale du polycarbonate et de la résine contenant un copolymère acrylonitrile-styrène est de 20 à 50 pcr.

4. La composition de résine selon la revendication 2 ou 3, où la quantité du copolymère d'un polymère acrylonitrile-styrène et d'un composé glycidylique est de 0,1 à 20 pcr.

5. La composition de résine selon l'une quelconque des revendications 1 à 4, où l'ester de cellulose contient du propionate d'acétate de cellulose.

6. La composition de résine selon l'une quelconque des revendications 1 à 5, contenant en outre un composé d'ester de phosphate condensé aromatique représenté par la formule développée suivante (1) dans une quantité allant de 5 à 40 pcr :

Formule développée (1)

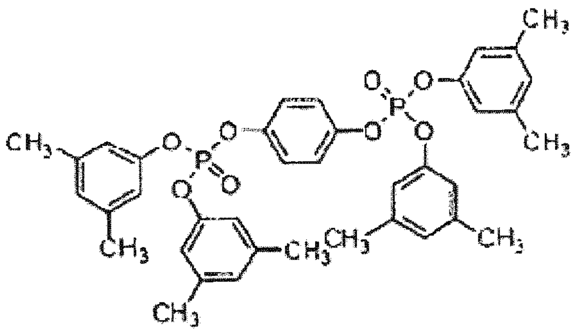

7. La composition de résine selon l'une quelconque des revendications 1 à 6, comprenant en outre un composé de sel d'ammonium, un composé de sel de mélamine ou un composé de sulfate dans une quantité allant de 0,005 à 20 pcr.

8. La composition de résine selon l'une quelconque des revendications 1 à 7, contenant en outre un agent anti-goutte qui est une résine à base de fluor.

9. Un article moulé en résine contenant :

un ester de cellulose dans une quantité allant de 50 à 95 pcr ; et
une résine contenant un copolymère acrylonitrile-styrène dans une quantité allant de 5 à 50 pcr.

10. L'article moulé en résine selon la revendication 9, contenant en outre un copolymère d'un polymère acrylonitrile-styrène et d'un composé glycidylique dans une quantité de 0,1 pcr ou plus.

11. L'article moulé en résine selon la revendication 9 ou 10, contenant en outre un polycarbonate, où une quantité totale du polycarbonate et de la résine contenant un copolymère acrylonitrile-styrène est de 20 à 50 pcr.

12. L'article moulé en résine selon la revendication 10 ou 11, où la quantité du copolymère d'un polymère acrylonitrile-styrène et d'un composé glycidylique est de 0,1 à 20 pcr.

13. L'article moulé en résine selon l'une quelconque des revendications 9 à 12, où l'ester de cellulose contient du propionate d'acétate de cellulose.

14. L'article moulé en résine selon l'une quelconque des revendications 9 à 13, comprenant en outre un composé d'ester de phosphate condensé aromatique représenté par la formule développée suivante (1) dans une quantité allant de 5 à 40 pcr :

Formule développée (1)

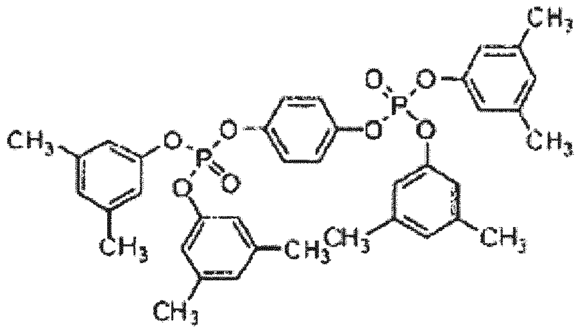

15. L'article moulé en résine selon l'une quelconque des revendications 9 à 14, contenant en outre un composé de sel d'ammonium, un composé de sel de mélamine ou un composé de sulfate dans une quantité allant de 0,005 à 20 pcr.

**16.** L'article moulé en résine selon l'une quelconque des revendications 9 à 15, contenant en outre un agent anti-goutte qui est une résine à base de fluor.

FIG.1

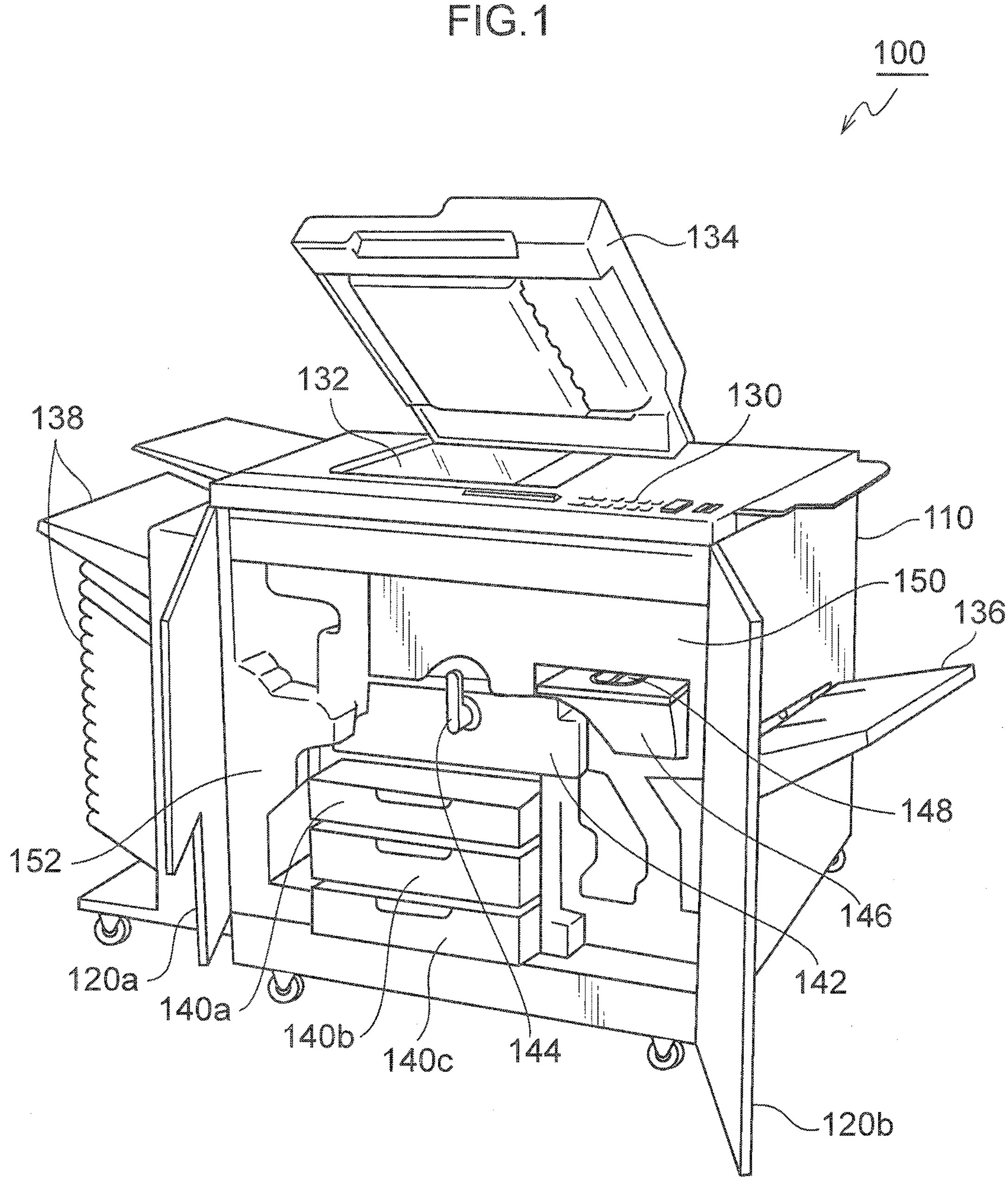
100
134
132
130
138
110
150
136
148
152
146
142
120a
140a
140b
140c
144
120b

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2007161943 A
- JP 2006111858 A
- JP 2008303288 A
- JP 3704280 B
- JP 3695958 B